# EUROPÄISCHE PATENTSCHRIFT

(11) **EP 3 099 448 B1**
(45) Veröffentlichungstag und Bekanntmachung des Hinweises auf die Patenterteilung: **01.08.2018**
(21) Anmeldenummer: 14828163.7
(22) Anmeldetag: 29.12.2014
(51) Int. Cl.: B23Q 17/09

(54) **WERKZEUGMASCHINENVORRICHTUNG**
MACHINE TOOL DEVICE
DISPOSITIF DE MACHINE-OUTIL

(30) Priorität: 27.01.2014 DE 102014201371; 13.05.2014 DE 102014208980
(43) Veröffentlichungstag der Anmeldung: 07.12.2016
(73) Patentinhaber: Robert Bosch GmbH, 70442 Stuttgart (DE)
(72) Erfinder: BOECK, Cornelius, 73230 Kirchheim (DE); BARTH, Daniel, 70771 Leinfelden-Echterdingen (DE); SCHADOW, Joachim, 70563 Stuttgart (DE); MAUTE, Joerg, 71069 Sindelfingen (DE); ESENWEIN, Florian, 70771 Leinfelden-Echterdingen (DE); LUTZ, Manfred, 70794 Filderstadt (DE); STOCK, Joern, 72658 Bempflingen (DE)
(86) Internationale Anmeldenummer: PCT/EP2014/079360
(87) Internationale Veröffentlichungsnummer: WO 2015/110245

(56) Entgegenhaltungen:
- EP-A1- 2 212 057
- DE-A1-102007 032 221
- US-A1- 2013 187 587

## Beschreibung

### Stand der Technik

Aus US 2013/0187587 A1 ist bereits eine Werkzeugmaschinenvorrichtung, insbesondere eine Handwerkzeugmaschinenvorrichtung, bekannt, die eine Steuer- und/oder Regeleinheit und eine Antriebseinheitssensoreinheit zu einer Erfassung zumindest einer Antriebseinheitskenngröße umfasst, wobei die Antriebseinheitskenngröße zu einer Steuerung und/oder Regelung einer Antriebseinheit einer Werkzeugmaschine und/oder zu einer Informationsausgabe an einen Bediener von der Steuer- und/oder Regeleinheit verarbeitbar ist.

### Offenbarung der Erfindung

Die Erfindung geht aus von einer Werkzeugmaschinenvorrichtung, insbesondere von einer Handwerkzeugmaschinenvorrichtung, mit zumindest einer Steuer- und/oder Regeleinheit und mit zumindest einer Antriebseinheitssensoreinheit zu einer Erfassung zumindest einer Antriebseinheitskenngröße, die zumindest zu einer Steuerung und/oder Regelung einer Antriebseinheit einer Werkzeugmaschine und/oder zu einer Informationsausgabe an einen Bediener von der Steuer- und/oder Regeleinheit verarbeitbar ist.

Es wird vorgeschlagen, dass die Werkzeugmaschinenvorrichtung zumindest eine Bedienersensoreinheit zu einer Erfassung zumindest einer bedienerspezifischen Kenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Die Steuer- und/oder Regeleinheit ist zumindest vorzugsweise dazu vorgesehen, die Antriebseinheit in Abhängigkeit von der zumindest einen mittels der Antriebseinheitssensoreinheit erfassten Antriebseinheitskenngröße und in Abhängigkeit von der zumindest einen mittels der Bedienersensoreinheit erfassten bedienerspezifischen Kenngröße zu steuern und/oder zu regeln. Zusätzlich ist die Steuer- und/oder Regeleinheit bevorzugt zumindest dazu vorgesehen, eine Information in Abhängigkeit von der zumindest einen mittels der Antriebseinheitssensoreinheit erfassten Antriebseinheitskenngröße und in Abhängigkeit von der zumindest einen mittels der Bedienersensoreinheit erfassten bedienerspezifischen Kenngröße an einen Bediener auszugeben. Bevorzugt ist zumindest eine Antriebseinheitskennlinie, eine maximale Drehzahl, eine minimale Drehzahl, ein maximales Drehmoment und/oder ein minimales Drehmoment der Antriebseinheit. mittels der Steuer- und/oder Regeleinheit steuerbar und/oder regelbar.

Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Unter "vorgesehen" soll insbesondere speziell programmiert, speziell ausgelegt und/oder speziell ausgestattet verstanden werden. Darunter, dass ein Element und/oder eine Einheit zu einer bestimmten Funktion vorgesehen sind/ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Die Antriebseinheitssensoreinheit ist vorzugsweise dazu vorgesehen, zumindest eine Antriebseinheitskenngröße einer als Elektromotoreinheit, insbesondere einer als bürstenlose Elektromotoreinheit, ausgebildeten Antriebseinheit zu erfassen. Somit ist die Antriebseinheitssensoreinheit bevorzugt als EC-Elektromotorantriebseinheitssensoreinheit ausgebildet. Die Antriebseinheitskenngröße kann hierbei als Antriebseinheitsstrom, als Antriebseinheitsspannung, als Antriebseinheitsdrehwinkel, als elektrischer Antriebseinheitswiderstand, als Antriebseinheitsmagnetfeldkenngröße, als elektromotorische Kraftkenngröße der Antriebseinheit, als Antriebseinheitsdrehzahl, als Antriebseinheitsdrehmoment, als Antriebseinheitswinkelgeschwindigkeit, als Antriebseinheitsrotorposition, als Antriebseinheitsdrehrichtung, als Antriebseinheitstemperatur oder als eine weitere, einem Fachmann als sinnvoll erscheinende Antriebseinheitskenngröße ausgebildet sein. Die Antriebseinheitskenngröße ist vorzugsweise verschieden von einer reinen Schalterbetätigung eines Schalters durch einen Bediener. Die Antriebseinheitssensoreinheit umfasst zumindest ein Antriebseinheitssensorelement zu einer Erfassung der zumindest einen Antriebseinheitskenngröße. Das Antriebseinheitssensorelement kann hierbei als Antriebseinheitsstromsensor, als Antriebseinheitsspannungssensor, als Antriebseinheitsdrehwinkelsensor, als elektrischer Antriebseinheitswiderstandssensor, als Antriebseinheitsmagnetfeldsensor, als elektromotorischer Kraftkenngrößensensor, als Antriebseinheitsdrehzahlsensor, als Antriebseinheitsdrehmomentsensor, als Antriebseinheitswinkelgeschwindigkeitssensor, als Antriebseinheitsrotorpositionssensor, als Antriebseinheitsdrehrichtungssensor, als Antriebseinheitstemperatursensor oder als ein weiteres, einem Fachmann als sinnvoll erscheinendes Antriebseinheitssensorelement ausgebildet sein.

Eine Informationsausgabeeinheit zu einer Informationsausgabe an einen Bediener ist vorzugsweise als optische, akustische und/oder haptische Informationsausgabeeinheit ausgebildet. Hierbei ist die Informationsausgabeeinheit vorzugsweise ein Bestandteil der Werkzeugmaschinenvorrichtung. Es ist jedoch auch denkbar, dass die Informationsausgabeeinheit ein Bestandteil einer die Werkzeugmaschinenvorrichtung umfassenden Werkzeugmaschine oder ein Bestandteil einer externen Einheit, wie beispielsweise eines Smartphones, eines Tablets, eines PCs, eines Laptops o. dgl., ist. Die Informationsausgabeeinheit umfasst zu einer Informationsausgabe an einen Bediener vorzugsweise zumindest eine optische Ausgabeeinheit, wie beispielsweise ein LC-Display, ein berührungsempfindliches Display, ein LED-Display, ein Plasma-Display o. dgl., zu einer optischen Informationsausgabe an einen Bediener. Bevorzugt umfasst die Informationsausgabeeinheit zumindest eine akustische Ausgabeeinheit, wie beispielsweise einen Lautsprecher o. dgl., zu einer akustischen Informationsausgabe an einen Bediener. Besonders bevorzugt umfasst die Informationsausgabeeinheit zumindest eine haptische Ausgabeeinheit, wie beispielsweise eine Schwingungserregereinheit o. dgl., zu einer haptischen Informationsausgabe an einen Bediener. Es ist jedoch auch denkbar, dass eine Informationsausgabe an einen Bediener infolge einer Ansteuerung der Antriebseinheit mittels der Steuer- und/oder Regeleinheit erfolgt. Hierbei ist es denkbar, dass eine Informationsausgabe an einen Bediener beispielsweise durch eine Drehzahlschwankung einer Antriebseinheitsdrehzahl o. dgl. erfolgt. Weitere, einem Fachmann als sinnvoll erscheinende antriebseinheitsbezogene Informationsausgaben an einen Bediener sind ebenfalls denkbar.

Unter einer "bedienerspezifischen Kenngröße" soll hier insbesondere eine Kenngröße verstanden werden, die abhängig ist von einem Bediener selbst, wie beispielsweise ein Ausbildungsstand eines Bedieners, ein sicherer Stand eines Bedieners, eine Müdigkeit eines Bedieners, eine körperliche Verfassung eines Bedieners usw., und/oder die abhängig ist von einem Verhalten eines Bedieners, wie beispielsweise ein Nutzungsverhalten eines Bedieners einer die Werkzeugmaschinenvorrichtung umfassenden Werkzeugmaschine, eine Einwirkung eines Bedieners auf die Werkzeugmaschinenvorrichtung, insbesondere eine Einwirkung eines Bedieners auf eine die Werkzeugmaschinenvorrichtung umfassende Werkzeugmaschine usw. Die bedienerspezifische Kenngröße kann hierbei als Bedienerandrückkraft, als Bedienervorschubkraft, als Bedienerausbildungsstatus, als Bedienerhaltekraft, als bedienerspezifische Belastungsart, als Bedieneranwendungsfall, als Bedieneranpressdruck, als Bedienernutzungsgrad, wie beispielsweise eine häufige Nutzung oder eine seltene Nutzung beschreibende Kenngröße, als Bedienernutzungsdauer, als Bedienerbelastung, wie beispielsweise eine Geräuschbelastung und/oder eine Schwingungsbelastung, als Bedienerzugangsberechtigung zu einem Ort, als Körperkenngröße eines Bedieners, wie beispielsweise eine Körpertemperatur, ein Puls eines Bedieners, eine Müdigkeitskenngröße eines Bedieners, eine Position zumindest einer Hand des Bedieners usw., oder als eine andere, einem Fachmann als sinnvoll erscheinende bedienerspezifische Kenngröße ausgebildet sein.

Anhand der bedienerspezifischen Kenngröße sind zudem mittels der Steuer- und/oder Regeleinheit besonders bevorzugt Sicherheitsfunktionen, insbesondere Sicherheitsfunktionen einer die Werkzeugmaschinenvorrichtung umfassenden Werkzeugmaschine und/oder Sicherheitsfunktionen von an der Werkzeugmaschine anordenbaren Werkzeugmaschinenzubehöreinheiten, steuerbar und/oder regelbar. Hierbei sind beispielsweise mittels der Steuer- und/oder Regeleinheit Sicherheitsparameter, wie beispielsweise ein Kick-Back-Parameter, ein maximales Drehmoment, eine maximale Drehzahl, eine Schlagenergie, eine Schutzhaubenposition und/oder ein Überrastkupplungsauslösemoment einstellbar. Die Sicherheitsparameter sind hierbei vorzugsweise abhängig von einer Werkzeugmaschinenart, in der die Werkzeugmaschinenvorrichtung zum Einsatz kommt.

Mittels der erfindungsgemäßen Ausgestaltung kann vorteilhaft ein Bediener während einer Bedienung einer die Werkzeugmaschinenvorrichtung umfassenden Werkzeugmaschine überwacht werden. Es kann vorteilhaft eine Schutzfunktion in Abhängigkeit der bedienerspezifischen Kenngröße eingestellt und/oder aktiviert werden. Somit kann vorteilhaft ein Verletzungsrisiko für einen Bediener und/oder eine Fehlbedienung einer die Werkzeugmaschinenvorrichtung umfassenden Werkzeugmaschine gering gehalten werden. Ferner kann vorteilhaft eine Überlastung eines Bedieners erkannt werden und entsprechende Maßnahmen können vorteilhaft eingeleitet werden, wie beispielsweise eine Ermüdungswarnung, eine Überlastungswarnung, eine Warnung vor einer Verletzung usw. Zudem kann vorteilhaft ein Bedienerverhalten zu einer Steuerung und/oder einer Regelung der Antriebseinheit berücksichtigt werden. Hierbei ist beispielsweise denkbar, dass ein Parameter eines Anlaufverhaltens an die bedienerspezifische Kenngröße anpassbar ist, eine Antriebseinheitskenngröße an die bedienerspezifische Kenngröße anpassbar ist, eine Schlagfrequenz an die bedienerspezifische Kenngröße anpassbar ist, eine Schlagenergie an die bedienerspezifische Kenngröße anpassbar ist, ein Pendelhubparameter an die bedienerspezifische Kenngröße anpassbar ist oder weitere, einem Fachmann als sinnvoll erscheinende Parameter oder Kennfelder einer Antriebseinheit an die bedienerspezifische Kenngröße anpassbar sind. Zudem kann vorteilhaft ein Bediener in eine Nutzergruppe eingeordnet werden, um Parameter zu einer Steuerung und/oder Regelung der Antriebseinheit auf den Bediener anzupassen.

Des Weiteren wird vorgeschlagen, dass die Werkzeugmaschinenvorrichtung zumindest eine Kommunikationseinheit zu einer Kommunikation mit zumindest einer externen Einheit zu einem Austausch von elektronischen Daten zumindest zu einer Steuerung und/oder Regelung der Antriebseinheit umfasst. Die Kommunikationseinheit ist vorzugsweise als kabellose Kommunikationseinheit ausgebildet. Hierbei kann die Kommunikationseinheit als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Kommunikationseinheit zu einer bidirektionalen Datenübertragung vorgesehen. In einer alternativen Ausgestaltung ist die Kommunikationseinheit als kabelgebundene Kommunikationseinheit ausgebildet, wie beispielsweise als LAN-Kommunikationseinheit, als USB-Kommunikationseinheit o. dgl. Die externe Einheit ist vorzugsweise als Smartphone ausgebildet, das eine App zu einer Kommunikation mit der Kommunikationseinheit aufweist. Es ist jedoch auch denkbar, dass die externe Einheit als externe, transportable Bedieneinheit, als fest installierte Bedieneinheit an einem Arbeitsplatz eines Bedieners, als fest in einem Raum installierte Synchronisationseinheit eines Einsatzortes, die von einer Zentrale gesteuert werden kann, wie beispielsweise infolge von Firmenvorgaben/Sicherheitsbestimmungen, als Bedienerkörperkenngrößenüberwachungseinheit oder als weitere, einem Fachmann als sinnvoll erscheinende zentrale oder dezentrale Bedieneinheit, Eingabestation und/oder zentrales oder dezentrales Terminal ausgebildet ist. Es kann somit vorteilhaft eine Synchronisation von elektronischen Daten ermöglicht werden. Wird beispielsweise eine die Werkzeugmaschinenvorrichtung umfassende Werkzeugmaschine in einem Synchronisationsmodus in Betrieb genommen, beispielsweise durch ein Einstecken einer Akkumulatorvorrichtung, bei einem Einstecken eines Stromversorgungskabels oder durch eine Aktivierung durch einen Bediener, wird zumindest teilweise automatisch eine Verbindung zwischen der Kommunikationseinheit und der externen Einheit aufgebaut. In der externen Einheit hinterlegte Einstellungen sind somit vorzugsweise direkt auf die die Werkzeugmaschinenvorrichtung umfassende Werkzeugmaschine übertragbar. Hierbei kann es sich um individuelle Einstellungen eines Bedieners, wie beispielsweise ein gewünschtes, schnelles Hochfahren auf eine eingestellte Drehzahl und eine maximale Leistung, um Vorgaben einer Firma, wie beispielsweise eine Einhaltung einer Sicherheitsfunktion in einem vorgegebenen Bereich eines Firmengeländes oder eines Einsatzorts usw. handeln. Zudem ist durch eine Verbindung der Werkzeugmaschinenvorrichtung und der externen Einheit mittels der Kommunikationseinheit eine zentrale Steuerung der Werkzeugmaschine, wie beispielsweise ein zentrales Abschalten der Werkzeugmaschine erreichbar, wie beispielsweise einem Brand etc. Wird eine Werkzeugmaschine aus einem vorgegeben Bereich entfernt, wird die Werkzeugmaschine vorzugsweise deaktiviert und kann somit außerhalb des vorgegebenen Bereichs nicht aktiviert werden.

Zudem sind elektronische Daten mittels der Kommunikationseinheit an die externe Einheit übertragbar. Hierbei ist beispielsweise eine Vibrationsbelastung eines Bedieners zu einer Kontrolle einer Einhaltung einer Belastungsgrenze und/oder eine eventuelle Bezahlung von Zulagen und/oder eine Laufzeit und eine Last zu einer Beurteilung einer Werkzeugmaschinenauslastung an eine Firmenzentrale o. dgl. übertragbar. Es ist zudem denkbar, dass die externe Einheit ein Vorhandensein einer Sicherheitsausrüstung und/oder einer geeigneten Arbeitskleidung überprüft, wie beispielsweise mittels RFID-Kennung usw., wobei die externe Einheit in Abhängigkeit einer erkannten Sicherheitsausrüstung und/oder einer geeigneten Arbeitskleidung Einstellungen zu einer Steuerung und/oder Regelung der Antriebseinheit und/oder von Sicherheitsfunktionen der die Werkzeugmaschinenvorrichtung umfassenden Werkzeugmaschine über die Kommunikationseinheit an die Steuer- und/oder Regeleinheit überträgt. Mittels der erfindungsgemäßen Ausgestaltung kann vorteilhaft eine komfortable, insbesondere zentrale, Einstellung von Kenngrößen einer die Werkzeugmaschinenvorrichtung umfassenden Werkzeugmaschine erfolgen. Zudem kann vorteilhaft eine Kommunikation zwischen der Steuer- und/oder Regeleinheit und einer als Bedienerkörperkenngrößenüberwachungseinheit ausgebildeten externen Einheit und/oder einer anderen, einem Fachmann als sinnvoll erscheinenden externen Einheit erfolgen, um vorteilhaft Sicherheitsfunktionen zu steuern und/oder zu regeln. Somit kann vorteilhaft ein hohes Maß an Sicherheit für einen Bediener gewährleistet werden.

Ferner wird vorgeschlagen, dass die Steuer- und/oder Regeleinheit dazu vorgesehen ist, mittels der Kommunikationseinheit auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit von der Steuer- und/oder Regeleinheit verarbeitbar sind/ist. Somit ist die Steuer- und/oder Regeleinheit vorzugsweise dazu vorgesehen, zumindest die Antriebseinheit der tragbaren Werkzeugmaschine in Abhängigkeit von zumindest einer Sicherheits- und/oder Betriebsbereichsregel eines Bereichs einer Infrastruktur zu steuern und/oder zu regeln. Hierbei ist insbesondere ein Ort, wie beispielsweise eine globale Position, an dem die tragbare Werkzeugmaschine innerhalb der Infrastruktur genutzt wird, berücksichtigbar. Zudem ist es denkbar, dass die Steuer- und/oder Regeleinheit dazu vorgesehen ist, weitere Funktionen der tragbaren Werkzeugmaschine, wie beispielsweise eine Sicherheitsfunktion (Kick-Back-Funktion o. dgl.) in Abhängigkeit von zumindest einer Sicherheits- und/oder Betriebsbereichsregel eines Bereichs einer Infrastruktur zu steuern und/oder zu regeln. Zudem ist es denkbar, dass Orte, wie beispielsweise Baustellen, außerhalb der Infrastruktur mittels eines digitalen Sicherheits- und/oder Betriebsbereichsregelrasters auf Grundlage von GPS-Daten überzogen sind, mittels dem eine Zuordnung von Sicherheits- und/oder Betriebsbereichsregeln für einen Ort außerhalb der Infrastruktur erreichbar ist.

Der Begriff "zentrale Datenbank" soll hier insbesondere eine Datenbank definieren, die zentral von einer Verwaltungseinheit, wie beispielsweise von einer Gebäudeverwaltung, von einer Sicherheitsverwaltung o. dgl. gepflegt und/oder verwaltet wird. Bevorzugt sind in der zentralen Datenbank Daten, insbesondere elektronische Daten, hinterlegt, die spezifische Regeln, Auflagen, Gefährdungspotenziale, Sicherheitskategorien o. dgl. für zumindest einen Bereich einer Infrastruktur, insbesondere einen Bereich eines Werksgeländes, einen Bereich einer Arbeitsstätte o. dgl. definieren. In einer Infrastruktur, insbesondere in einer Infrastruktur eines Werksgeländes sind Labore, Werkstätten, Büros o. dgl. vorhanden, die unterschiedliche Gefährdungspotenziale aufweisen. Hierbei trägt insbesondere das Facility Management (FCM) eine Verantwortung für technische Einrichtungen und/oder einzelne Bereiche der Infrastruktur. Vorzugsweise werden regelmäßig Gefährdungsbeurteilungen von Health and Safety Engineers (HSE) für technische Einrichtungen und/oder für einzelne Bereiche der Infrastruktur durchgeführt. Somit werden vorzugsweise einzelnen Bestandteilen der Infrastruktur, wie beispielsweise einzelnen Laboren, einzelnen Werkstätten und/oder einzelnen Büros spezifische Regeln, Auflagen, Sicherheitskategorien o. dgl. zugeordnet. Beispielsweise kann eine Zuordnung vorgenommen werden, die besagt, dass hohe bis sehr hohe Sicherheitsstandards einzuhalten sind. Hierbei kann beispielsweise in einzelnen Bereichen der Infrastruktur, insbesondere in bestimmten Räumen, ein Explosionsschutz gelten. Somit sind vorzugsweise in diesen Bereichen Arbeiten untersagt, bei denen beispielsweise Funken entstehen können, oder es sind nur bestimmte Werkzeugmaschinen zu einer Durchführung der Arbeiten zugelassen. Ferner sind Zuordnungen mit mittleren bis niedrigen Sicherheitsstandards denkbar. Zudem sind zusätzlich oder alternativ Zuordnungen denkbar, die Vibrations- und/oder Geräuschlimits betreffen.

Bevorzugt wird die zentrale Datenbank in regelmäßigen Zeitabständen aktualisiert, insbesondere von einem Mitarbeiter des Facility Managements und/oder von einem Health and Safety Engineer (HSE). Hierbei werden vorzugsweise für die einzelnen Bereiche der Infrastruktur, wie beispielsweise für einzelne Räume, Labore, Werkstätten o. dgl., Gefährdungsbeurteilungen durchgeführt. Anhand dieser Gefährdungsbeurteilungen sind enstprechende elektronische Daten in der zentralen Datenbank ablegbar, die in Abhängigkeit eines Grads der Gefährdung den einzelnen Bereichen der Infrastruktur Benutzungs- und/oder Betriebskenngrößen zu einer Benutzung und/oder zu einem Betrieb einer tragbaren Werkzeugmaschine vorgeben, wie beipsielsweise eine Einhaltung von vorgegebenen Verhaltensregeln, ein Vorhandensein einer persönlichen Schutzausrüstung (PSA), ein Festlegen einer Zugangsberechtigung, eine Vorweisungspflicht einer erweiterten Ausbildung oder einer Einweisung. Mittels der erfindungsgemäßen Ausgestaltung kann somit vorteilhaft eine hohe Anwendersicherheit erreicht werden, da eine automatische Einbeziehung von Sicherheits- und/oder Betriebsbereichsregeln mittels der Steuer- und/oder Regeleinheit erfolgt. Somit kann vorteilhaft eine orts- und/oder regelabhängige Steuer- und/oder Regelung der tragbaren Werkzeugmaschine erreicht werden. Zudem ist es denkbar, dass zusätzlich oder alternativ zu einer Kommunikation mit der zentralen Datenbank eine Kommunikation, insbesondere ein Datenaustausch, mit zumindest einer Sensoreinheit einer Arbeitskleidung, insbesondere einer persönlichen Schutzausrüstung (PSA), die ein Bediener und/oder Anwender am Körper trägt, erfolgt. Somit kann vorteilhaft eine Sicherheitsfunktion der tragbaren Werkzeugmaschine weiter gesteigert werden. Es kann besonders vorteilhaft eine sichere Erkennung von Gefahrensituationen infolge eines Anzeigens, eines aktiven Warnens, eines Außerbetriebnehmens der tragbaren Werkzeugmaschine o. dgl. ermöglicht werden. Somit kann ein Bediener der tragbaren Werkzeugmaschine vorteilhaft vor Gefährdungen und/oder vor Verletzungen geschützt werden.

Vorteilhafterweise ist die Steuer- und/oder Regeleinheit dazu vorgesehen, zumindest in Abhängigkeit von der zumindest einen bedienerspezifischen Kenngröße eine von einem Bediener unbeherrschte Bedienung der Werkzeugmaschine zu erkennen. Hierbei ist beispielsweise ein sicherer Stand des Bedieners auf einer Leiter, insbesondere auf einer Leitersprosse, mit zumindest einem Sensorelement der Bedienersensoreinheit, wie beispielsweise mittels zumindest eines an einem Kleidungsstück angeordneten Drucksensorelements der Bedienersensoreinheit oder einer externen Sensoreinheit, die über die Kommunikationseinheit mit der Werkzeugmaschinenvorrichtung kommuniziert, erfassbar. Bei einem Verkanten und/oder Blockieren des Bearbeitungswerkzeugs in einem zu bearbeitenden Werkstück ist beispielsweise mittels eines Drehzahlsensorelements einer Bearbeitungswerkzeugsensoreinheit der Werkzeugmaschinenvorrichtung oder mittels eines Drehzahlsensorelements der Bedienersensoreinheit ein Drehzahleinbruch erfassbar. Alternativ oder zusätzlich ist mittels eines Beschleunigungssensorelements der Bearbeitungswerkzeugsensoreinheit oder mittels eines Beschleunigungssensorelements der Bedienersensoreinheit ein Kickback oder ein Rückschlag der Werkzeugmaschine erfassbar. Infolge einer Erfassung eines Drehzahleinbruchs und/oder eines Kickbacks oder eines Rückschlags ist mittels der Steuer- und/oder Regeleinheit eine von einem Bediener unbeherrschte Bedienung der Werkzeugmaschine erkennbar. Zudem ist es denkbar, dass mit dem zumindest einen Sensorelement der Bedienersensoreinheit eine fehlende Druckbelastung des Bedieners erfassbar ist, wodurch ein nicht sicherer Stand und/oder ein freier Fall des Bedieners erkennbar ist. Ferner ist beispielsweise ein freier Fall der Werkzeugmaschine mittels des Beschleunigungssensorelements der Bearbeitungswerkzeugsensoreinheit oder mittels des Beschleunigungssensorelements der Bedienersensoreinheit erfassbar. Somit kann die Steuer- und/oder Regeleinheit einen Sturz, wie beispielsweise einen freien Fall, des Bedieners von der Leiter erkennen und Sicherheitsfunktionen aktiveren, wie beispielsweise ein aktives Abbremsen des Bearbeitungswerkzeugs und/oder ein Einfahren des Bearbeitungswerkzeugs in ein Werkzeugmaschinengehäuse, eine Unterbrechung einer Energieversorgung der Antriebseinheit o. dgl. Mittels der erfindungsgemäßen Ausgestaltung kann vorteilhaft eine hohe Bedienersicherheit realisiert werden.

In zumindest einer Ausgestaltung der erfindungsgemäßen Werkzeugmaschinenvorrichtung ist die Steuer- und/oder Regeleinheit dazu vorgesehen, zumindest in Abhängigkeit von zumindest einer mittels der Bedienersensoreinheit erfassten bedienerspezifischen Kenngröße mittels der Kommunikationseinheit und/oder mittels der Informationsausgabeeinheit zumindest ein Notsignal auszugeben. Wird ein Arbeitsunfall erkannt, wird ein Bediener beispielsweise mittels der Informationsausgabeeinheit (haptisch, optisch und/oder akustisch) aufgefordert seine Unversehrtheit zu quittieren, wie beispielsweise durch eine Betätigung eines Bedienelements der Werkzeugmaschinenvorrichtung oder einer externen Einheit, wie beispielsweise eines Smartphones, einer Uhr o. dgl. Erfolgt eine derartige Quittierung nicht innerhalb einer Zeitspanne von weniger als 50 Sekunden, wird mittels der Kommunikationseinheit und/oder mittels der Informationsausgabeeinheit zumindest ein Notsignal abgegeben. Zudem ist es denkbar, dass bei einer Abgabe eines Notrufs ebenfalls Positionsdaten und gegebenenfalls weitere Informationen, wie beispielsweise eine Art eines Unfalls (Sturz, Stromschlag o. dgl.), eine Herzfrequenz des verunglückten Bedieners etc. übermittelt werden. Somit kann vorteilhaft eine hohe Bedienersicherheit gewährleistet werden.

Vorzugsweise ist die Steuer- und/oder Regeleinheit ferner dazu vorgesehen, zumindest in Abhängigkeit von einer als Bedienerbelastung ausgebildeten bedienerspezifischen Kenngröße die Antriebseinheit zu steuern und/oder zu regeln und/oder eine Information auszugeben. Bei einer Überschreitung oder einem Erreichen einer persönlich zulässigen und/oder festgelegten Bedienervibrationsdosis unterbricht die Steuer- und/oder Regeleinheit in Abhängigkeit von der als Bedienervibrationsbelastung ausgebildeten bedienerspezifischen Kenngröße eine Energieversorgung der Antriebseinheit und/oder gibt eine Information aus. Werkzeugmaschinen mit einer hohen Schwingungserzeugung, wie beispielsweise Abbruchhammer, können dann durch den Bediener nicht mehr in Betrieb genommen werden. Werkzeugmaschinen mit einer geringen Schwingungserzeugung, wie beispielsweise Schrauber, können noch in Betrieb genommen werden. Die Bedienervibrationsdosis(en) kann/können sich aus Arbeiten mit verschiedenen Werkzeugmaschinen zusammensetzen. Bedienervibrationsdosisdaten sind anwenderspezifisch speicherbar, wie beispielsweis in einem Firmennetzwerk, in einem Smartphone, in der Speichereinheit der Steuer- und/oder Regeleinheit o. dgl. Die als Bedienervibrationsbelastung ausgebildeten bedienerspezifischen Kenngrößen sind beispielsweise mittels zumindest eines Beschleunigungssensorelements der Bedienersensoreinheit und/oder mittels zumindest eines Beschleunigungssensorelements einer externen Einheit erfassbar. Hierbei kann/können das/die Beschleunigungssensorelement/e an der Werkzeugmaschine und/oder am Bediener, insbesondere an Kleidungsstücken des Bedieners, angeordnet sein. Mittels der erfindungsgemäßen Ausgestaltung der Werkzeugmaschinenvorrichtung kann vorteilhaft eine bedienerfreundliche Handhabung der Werkzeugmaschine erreicht werden. Zudem kann vorteilhaft eine zu hohe Belastung eines Bedieners vermieden werden.

Ferner wird vorgeschlagen, dass die Werkzeugmaschinenvorrichtung zumindest eine Umgebungssensoreinheit zu einer Erfassung zumindest einer Umgebungskenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Unter einer "Umgebungssensoreinheit" soll hier insbesondere eine Sensoreinheit verstanden werden, die zumindest ein Umgebungssensorelement zu einer Erfassung von zumindest einer Umgebungskenngröße aufweist, die eine die Werkzeugmaschinenvorrichtung umgebende Umwelt definiert, eine Einwirkung der Werkzeugmaschinenvorrichtung auf die umgebende Umwelt definiert und/oder eine Positionierung der Werkzeugmaschinenvorrichtung relativ zur umgebenden Umwelt definiert. Hierbei ist die Umgebungssensoreinheit vorzugsweise dazu vorgesehen, zumindest einen Umgebungsdruck, eine Umgebungstemperatur, einen Umgebungsschallpegel, eine globale Position und/oder eine Position der Werkzeugmaschinenvorrichtung im Raum zu erfassen. Besonders bevorzugt ist die Steuer- und/oder Regeleinheit dazu vorgesehen, die Antriebseinheit und/oder Sicherheitsfunktionen in Abhängigkeit der zumindest einen mittels der Umgebungssensoreinheit erfassten Umgebungskenngröße und in Abhängigkeit von mittels der Kommunikationseinheit an die Steuer- und/oder Regeleinheit übertragenen elektronischen Daten zu steuern und/oder zu regeln. Mittels der erfindungsgemäßen Ausgestaltung der Werkzeugmaschinenvorrichtung kann vorteilhaft eine hohe Bedienersicherheit erreicht werden, da beispielsweise eine Ausrichtung der Werkzeugmaschinenvorrichtung in einem Raum und eine globale Position der Werkzeugmaschinenvorrichtung in Kombination mit ortsbedingten Sicherheitsanforderungen zu einer Steuerung und/oder Regelung der Antriebseinheit und/oder von Sicherheitsfunktionen nutzbar sind. Somit kann vorteilhaft ein Bediener vor Verletzungen geschützt werden.

Vorteilhafterweise adaptiert die Steuer- und/oder Regeleinheit zumindest einen in einer Speichereinheit der Steuer- und/oder Regeleinheit abgespeicherten Parameter zu einer Steuerung und/oder Regelung der Antriebseinheit zumindest in Abhängigkeit von zumindest einer mittels der Umgebungssensoreinheit erfassten und als globale Position ausgebildeten Umgebungskenngröße. Die Umgebungssensoreinheit umfasst hierzu vorzugsweise zumindest ein GPS-Sensorelement, mittels dessen eine globale Position der die Werkzeugmaschinenvorrichtung umfassenden Werkzeugmaschine erfassbar ist. Es ist jedoch auch denkbar, dass die Umgebungssensoreinheit ein anderes, einem Fachmann als sinnvoll erscheinendes Sensorelement zu einer Erfassung einer als globale Position ausgebildeten Umgebungskenngröße aufweist. Infolge einer Verbindung mit einem Netzwerk, wie beispielsweise ein Firmennetzwerk, ein Internetnetzwerk o. dgl., über die Kommunikationseinheit prüft die Steuer- und/oder Regeleinheit ob für die als globale Position ausgebildete Umgebungskenngröße Sicherheitseinstellungen und/oder aktuelle Klimadaten (Wetter) hinterlegt sind. Hierbei ist die Steuer- und/oder Regeleinheit beispielsweise bei Regenwetter dazu vorgesehen, vor einer Bestromung der Antriebseinheit eine Stromleckagemessung durchzuführen. Die hinterlegten Sicherheitseinstellungen können insbesondere Geräteanpassungen, wie beispielsweise eine Reduzierung einer maximalen Drehzahl, eine Änderung einer Kickbackempfindlichkeitseinstellung etc., Vorgaben, dass bestimmte Arbeiten mit bestimmten Zubehöreinheiten nicht durchgeführt werden können, oder Warnungen eines Bedieners sein, wie beispielsweise eine Warnung vor Explosions- und/oder Brandgefahr durch Funkenflug etc. Mittels der erfindungsgemäßen Ausgestaltung der Werkzeugmaschinenvorrichtung können vorteilhaft Steuer- und/oder Regelparameter an unterschiedliche Einsatzbedingungen angepasst werden.

Zudem wird vorgeschlagen, dass die Werkzeugmaschinenvorrichtung zumindest eine Werkzeugmaschinenzubehörsensoreinheit zu einer Erfassung zumindest einer Werkzeugmaschinenzubehörkenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Unter einer "Werkzeugmaschinenzubehörsensoreinheit" soll hier insbesondere eine Sensoreinheit verstanden werden, die eine Kenngröße zumindest eines Werkzeugmaschinenzubehörs erfasst, das an einer die Werkzeugmaschinenvorrichtung umfassenden Werkzeugmaschine anbringbar ist. Die Werkzeugmaschinenzubehörkenngröße kann hierbei als eine Zubehörzustandskenngröße, wie beispielsweise eine Montagezustandskenngröße eines Zubehörs, eine Abnutzungszustandskenngröße, als Zubehörpositionskenngröße, als Zubehörfunktionskenngröße, als Zubehörabmessungskenngröße o. dgl. ausgebildet sein. Somit kann vorteilhaft eine Berücksichtigung eines montierten Zubehörs bei einer Steuerung und/oder Regelung der Antriebseinheit mittels der Steuer- und/oder Regeleinheit erfolgen. Es kann beispielsweise vorteilhaft bei einem falschen, fehlerhaften und/oder verschlissenen Zubehör eine Informationsausgabe an einen Bediener erfolgen und/oder ein Steuer- und/oder Regelparameter kann vorteilhaft angepasst werden, wie beispielsweise eine Drehzahl, eine Stromzufuhr, eine Spannungszufuhr o. dgl.

Des Weiteren wird vorgeschlagen, dass die Werkzeugmaschinenvorrichtung zumindest eine Bearbeitungswerkzeugsensoreinheit zu einer Erfassung zumindest einer Bearbeitungswerkzeugkenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Die Bearbeitungswerkzeugsensoreinheit ist vorzugsweise dazu vorgesehen, zumindest eine Bearbeitungswerkzeugkenngröße eines in einer Werkzeugaufnahme angeordneten Bearbeitungswerkzeugs zu erfassen. Die Werkzeugaufnahme ist vorzugsweise ein Bestandteil einer die Werkzeugmaschinenvorrichtung umfassenden Werkzeugmaschine. Es ist jedoch auch denkbar, dass die Werkzeugaufnahme ein Bestandteil der Werkzeugmaschinenvorrichtung ist. Die Bearbeitungswerkzeugkenngröße kann hierbei als Bearbeitungswerkzeugmasse, als Bearbeitungswerkzeugabmessung, als Bearbeitungswerkzeugschwingung, als Bearbeitungswerkzeuggeschwindigkeit, als Bearbeitungswerkzeugdrehzahl, als Bearbeitungswerkzeugträgheit, als Bearbeitungswerkzeugart, als Bearbeitungswerkzeugtemperatur, als Bearbeitungswerkzeugverschmutzungsgrad, als Bearbeitungswerkzeugschneidkantenabnutzung, oder als eine andere, einem Fachmann als sinnvoll erscheinende Bearbeitungswerkzeugkenngröße ausgebildet sein. Die Bearbeitungswerkzeugsensoreinheit umfasst zumindest ein Bearbeitungswerkzeugsensorelement zu einer Erfassung der zumindest einen Bearbeitungswerkzeugkenngröße. Das Bearbeitungswerkzeugsensorelement kann hierbei als Bearbeitungswerkzeugmassensensor, als Bearbeitungswerkzeugabmessungssensor, als Bearbeitungswerkzeugschwingungssensor, als Bearbeitungswerkzeuggeschwindigkeitssensor, als Bearbeitungswerkzeugdrehzahlsensor, als Bearbeitungswerkzeugträgheitssensor, als Bearbeitungswerkzeugartensensor, als Bearbeitungswerkzeugtemperatursensor, als Bearbeitungswerkzeugverschmutzungsgradsensor, als Bearbeitungswerkzeugschneidkantenabnutzungssensor oder als ein anderes, einem Fachmann als sinnvoll erscheinendes Bearbeitungswerkzeugsensorelement ausgebildet sein.

Vorzugsweise sind/ist mittels der Steuer- und/oder Regeleinheit zumindest bei einem Hochlaufen der Antriebseinheit auf eine Leerlaufdrehzahl zumindest eine Antriebseinheitskenngröße und/oder zumindest eine Bearbeitungswerkzeugkenngröße ermittelbar. Hierbei sind bevorzugt mittels zumindest eines Bearbeitungswerkzeugsensorelements, das als Beschleunigungssensor ausgebildet ist, Schwingungen eines Bearbeitungswerkzeugs erfassbar, wobei die erfassten Signale mittels der Steuer- und/oder Regeleinheit auswertbar sind. Zudem ist vorzugsweise mittels zumindest eines weiteren Bearbeitungswerkzeugsensorelements, das als optischer Sensor (Kamera, Infrarotsensor usw.) oder als Abstandssensor ausgebildet ist, eine Bearbeitungswerkzeugkenngröße erfassbar, die zu einer Bestimmung einer Bearbeitungswerkzeugabmessung von der Steuer- und/oder Regeleinheit verarbeitbar ist. Zudem ist bevorzugt mittels eines Antriebseinheitssensorelements ein Motorstrom bei einem Hochfahren der Antriebseinheit auf eine Leerlaufdrehzahl erfassbar, die zu einer Bestimmung einer Trägheit eines Bearbeitungswerkzeugs mittels der Steuer- und/oder Regeleinheit verarbeitbar ist. Ferner ist mittels zumindest einer erfassten Bearbeitungswerkzeugkenngröße eine Bearbeitungswerkzeugart eines Bearbeitungswerkzeugs mittels der Steuer- und/oder Regeleinheit bestimmbar, wobei Parameter zu einer Steuerung und/oder einer Regelung der Antriebseinheit bearbeitungswerkzeugspezifisch veränderbar sind, wie beispielsweise eine Einstellung einer Drehzahl für Edelstahlanwendungen bei einem Erkennen eines Edelstahlbearbeitungswerkzeugs an einer als Winkelschleifer ausgebildeten tragbaren Werkzeugmaschine, ein Soft-Start bei einem Erkennen eines Polierbearbeitungswerkzeugs oder eine Aktivierung einer Bremsfunktion einer tragbaren Werkzeugmaschine bei einer Erkennung eines Trennbearbeitungswerkzeugs, wie beispielsweise einer Trennscheibe bei einer als Winkelschleifer ausgebildeten tragbaren Werkzeugmaschine. Zusätzlich zu einer Erfassung von zumindest einer Bearbeitungswerkzeugkenngröße mittels der Bearbeitungswerkzeugsensoreinheit ist auch eine Übertragung von zumindest einer Bearbeitungswerkzeugkenngröße mittels RFID, eines Barcodes, eines Data-Matrix Codes o. dgl. denkbar. Hierdurch kann vorteilhaft eine eindeutige Kennung einer Bearbeitungswerkzeugart erfolgen, zu der in der Speichereinheit der Steuer- und/oder Regeleinheit bearbeitungswerkzeugspezifische Parameter hinterlegt sind, die infolge einer Erfassung von zumindest einer Bearbeitungswerkzeugkenngröße durch die Bearbeitungswerkzeugsensoreinheit mittels der Steuer- und/oder Regeleinheit anpassbar sind, wie beispielsweise an einen Verschleißgrad, an einen Unwuchtgrad usw.

Ein elektronischer Datenaustausch zwischen der Steuer- und/oder Regeleinheit und der Antriebseinheitssensoreinheit und/oder der Bearbeitungswerkzeugsensoreinheit erfolgt vorzugsweise drahtgebunden. In einer alternativen Ausgestaltung der Werkzeugmaschinenvorrichtung erfolgt ein elektronischer Datenaustausch zwischen der Steuer- und/oder Regeleinheit und der Antriebseinheitssensoreinheit und/oder der Bearbeitungswerkzeugsensoreinheit kabellos, wie beispielsweise mittels einer Bluetoothverbindung, mittels einer WLAN-Verbindung, mittels einer NFC-Verbindung, mittels einer Infrarotverbindung o. dgl. Die Steuer- und/oder Regeleinheit steuert und/oder regelt die Antriebseinheit besonders bevorzugt zumindest in Abhängigkeit von der mittels der Antriebseinheitssensoreinheit erfassten Antriebseinheitskenngröße und in Abhängigkeit von der mittels der Bearbeitungswerkzeugsensoreinheit erfassten Bearbeitungswerkzeugkenngröße. Weitere, einem Fachmann als sinnvoll erscheinende Kenngrößen, die von der Steuer- und/oder Regeleinheit zu einer Steuerung und/oder Regelung der Antriebseinheit berücksichtigbar sind, sind ebenfalls denkbar.

Mittels der erfindungsgemäßen Ausgestaltung der Werkzeugmaschinenvorrichtung kann vorteilhaft eine Beschädigung an einem Bearbeitungswerkzeug erkannt werden, insbesondere bevor ein Werkstück mit dem Bearbeitungswerkzeug bearbeitet wird. Es können vorteilhaft beispielsweise Vibrationen erfasst werden und eine entsprechende Warnung an einen Bediener ausgegeben werden, sollten die Vibrationen einen kritischen Wert überschreiten und/oder eine Steuerung und/oder Regelung der Antriebseinheit an ein beschädigtes Bearbeitungswerkzeug angepasst werden. Somit kann vorteilhaft eine Verletzungsgefahr für einen Bediener gering gehalten werden. Zudem können somit vorteilhaft unzulässig oder falsch montierte Bearbeitungswerkzeuge erkannt werden. Somit kann ein Bediener beispielsweise vorteilhaft frühzeitig auf eine Gefahr eines Berstens eines Bearbeitungswerkzeugs hingewiesen werden. Es kann daher vorteilhaft eine hohe Bedienersicherheit erreicht werden.

Ferner wird vorgeschlagen, dass die Werkzeugmaschinenvorrichtung zumindest eine Werkstücksensoreinheit zu einer Erfassung zumindest einer Werkstückkenngröße umfasst, die zumindest zu einer Steuerung und/oder Regelung der Antriebseinheit und/oder zu einer Informationsausgabe an einen Bediener von der Steuer- und/oder Regeleinheit verarbeitbar ist. Bevorzugt ist die Werkstücksensoreinheit dazu vorgesehen, zumindest einen Werkstoff eines Werkstücks zu erfassen. Zudem ist die Werkstücksensoreinheit zusätzlich oder alternativ dazu vorgesehen, eine Dichte eines Werkstücks, einen Abstand eines Werkstücks relativ zu einem in einer Werkzeugaufnahme angeordneten Bearbeitungswerkzeug, eine Abmessung eines Werkstücks, eine Lage eines Werkstücks und/oder weitere, einem Fachmann als sinnvoll erscheinende Werkstückkenngrößen zu erfassen. Somit kann vorteilhaft eine Steuerung und/oder Regelung einer Antriebseinheit erfolgen, die vorteilhaft auf ein zu bearbeitendes Werkstück und ein in einer Werkzeugaufnahme angeordnetes Bearbeitungswerkzeug abgestimmt ist. Hierdurch kann vorteilhaft eine präzise Bearbeitung eines Werkstücks ermöglicht werden. Zudem kann vorteilhaft ein hoher Arbeitsfortschritt ermöglicht werden. Es kann vorteilhaft infolge einer Erfassung zumindest einer Werkstückkenngröße auf ein Verhalten bei einer Bearbeitung des Werkstücks geschlossen werden. Somit kann vorteilhaft eine hohe Sicherheit hinsichtlich einer Splittergefahr bei einer Bearbeitung eines Werkstücks erreicht werden.

Vorteilhafterweise ist die Steuer- und/oder Regeleinheit in zumindest einem Betriebsmodus dazu vorgesehen, in Abhängigkeit von zumindest einer mittels der Werkstücksensoreinheit erfassten Werkstückkenngröße, die einen in einem Werkstück befindlichen Gegenstand definiert, die Antriebseinheit zu steuern und/oder zu regeln. Die Werkstücksensoreinheit umfasst hierzu vorzugsweise zumindest ein Sensorelement, das dazu vorgesehen ist, zumindest einen in einem Werkstück befindlichen Gegenstand, wie beispielsweise eine Strom- oder Wasserleitung, einen Metallgegenstand, ein Rohr etc. zu erfassen. Bei einer Annäherung des Bearbeitungswerkzeugs und/oder bei einem direkten Kontakt zwischen dem Bearbeitungswerkzeug und dem zu bearbeitenden Werkstück, wie beispielsweise bei einem Bohren, einem Schneiden etc., ist mittels der Informationsausgabeeinheit ein Signalton ausgebbar. Zudem ist es denkbar, dass eine Energieversorgung der Antriebseinheit von der Steuer- und/oder Regeleinheit unterbrechbar ist und/oder zu einem aktiven Abbremsen der Antriebseinheit von der Steuer- und/oder Regeleinheit nutzbar ist. Es kann vorteilhaft ein Beschädigungsrisiko des Bearbeitungswerkzeugs bei einer Bearbeitung eines Werkstücks gering gehalten werden.

Zudem wird vorgeschlagen, dass die Antriebseinheitssensoreinheit dazu vorgesehen ist, zumindest eine als Lüftungskenngröße ausgebildete Antriebseinheitskenngröße und/oder eine als Bedienergefährdungskenngröße ausgebildete Antriebseinheitskenngröße zu erfassen. Hierzu umfasst die Antriebseinheitssensoreinheit zumindest ein Drucksensorelement, das dazu vorgesehen ist, einen Luftstrom und/oder einen Luftdruck im Werkzeugmaschinengehäuse zu erfassen. Erkennt die Steuer- und/oder Regeleinheit ein Abfallen des Luftstroms und/oder des Luftdrucks unter einen Sollwert, ist dies zumindest mittels der Informationsausgabeeinheit ausgebbar. Alternativ oder zusätzlich ist es denkbar, dass die Antriebseinheitssensoreinheit zumindest ein Messkontaktelement umfasst, das dazu vorgesehen ist, Metallstaubansammlungen und/oder Metallstaubbrücken im und/oder am Werkzeugmaschinengehäuse zu erfassen. Die Erfassung von Metallstaubansammlungen und/oder Metallstaubbrücken sind beispielsweise von der Steuer- und/oder Regeleinheit zu einer Erkennung einer Möglichkeit eines Ableitstroms von der Werkzeugmaschine an eine Umgebung, insbesondere an einen Bediener, auswertbar. Wird mittels der Steuer- und/oder Regeleinheit ein Ableitstrom von der Werkzeugmaschine an die Umgebung, insbesondere an den Bediener, erkannt, wird eine Energieversorgung der Werkzeugmaschine unterbrochen. Mittels der erfindungsgemäßen Ausgestaltung der Werkzeugmaschinenvorrichtung kann vorteilhaft eine zuverlässige Belüftung der Antriebseinheit sichergestellt werden. Somit kann eine lange Lebensdauer der Werkzeugmaschine erreicht werden. Zudem kann vorteilhaft eine hohe Bedienersicherheit erreicht werden.

Vorzugsweise umfasst die Werkzeugmaschinenvorrichtung zumindest eine Eingabeeinheit zu einer Eingabe zumindest einer Bearbeitungskenngröße, die zumindest zu einer Steuerung und/oder Regelung der Antriebseinheit von der Steuer- und/oder Regeleinheit verarbeitbar ist. Die Eingabeeinheit kann hierbei als berührungsempfindliches Display und/oder als tastengebundene Eingabeschnittstelle ausgebildet sein. Mittels der Eingabeeinheit sind vorzugsweise zumindest eine Antriebseinheitskennlinie, eine maximale Drehzahl, eine minimale Drehzahl, ein maximales Drehmoment, ein minimales Drehmoment, ein Ausbildungsstand eines Bedieners und/oder ein Bearbeitungsort eines Bedieners durch eine Eingabe eines Bedieners einstellbar. Es ist zudem denkbar, dass alternativ oder zusätzlich Bearbeitungswerkzeugkenngrößen und/oder Werkstückkenngrößen mittels der Eingabeeinheit von einem Bediener eingebbar sind, die bei einer Steuerung und/oder Regelung der Antriebseinheit von der Steuer- und/oder Regeleinheit verarbeitbar sind. Somit ist vorteilhaft ein aktives Eingreifen eines Bedieners in eine Steuerung und/oder Regelung der Antriebseinheit erreichbar. Zudem können vorteilhaft unterschiedliche Parameter eingegeben werden, die zu einer Berücksichtigung bei einer Steuerung und/oder Regelung einer Sicherheitsfunktion nutzbar sind. Somit kann vorteilhaft eine komfortabel bedienbare Werkzeugmaschinenvorrichtung erreicht werden, die ein hohes Maß an Sicherheit zur Verfügung stellen kann.

Des Weiteren wird eine Werkzeugmaschine, insbesondere eine tragbare Werkzeugmaschine mit einer erfindungsgemäßen Werkzeugmaschinenvorrichtung vorgeschlagen. Besonders bevorzugt ist die Werkzeugmaschine als tragbare Werkzeugmaschine ausgebildet. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Hierbei ist die tragbare Werkzeugmaschine vorzugsweise als Winkelschleifer ausgebildet. In einer alternativen Ausgestaltung ist die tragbare Werkzeugmaschine als Bohr- und/oder Meißelhammer ausgebildet. In einer weiteren alternativen Ausgestaltung ist die tragbare Werkzeugmaschine als Stichsäge ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Akkuschraubmaschine, als Schlagbohrmaschine, als Schleifmaschine, als Kreissägemaschine, als Diamantbohrmaschine, als Kettensäge, als Säbelsäge, als Hobelmaschine, als Gartenwerkzeugmaschine o. dgl. Mittels der erfindungsgemäßen Ausgestaltung der Werkzeugmaschine kann eine vorteilhafte Anpassung an Einsatzbedingungen ermöglicht werden. Zudem kann vorteilhaft eine auf einen Bediener individuell eingestellte Bearbeitung eines Werkstücks ermöglicht werden. Somit kann vorteilhaft eine präzise und leistungsoptimierte Bearbeitung eines Werkstücks ermöglicht werden. Zudem kann vorteilhaft eine hohe Sicherheit eines Bedieners bei einer Bearbeitung eines Werkstücks gewährleistet werden.

Ferner wird ein Werkzeugmaschinensystem mit zumindest einer erfindungsgemäßen Werkzeugmaschine und mit zumindest einer externen Einheit, insbesondere einer externen Sensoreinheit vorgeschlagen. Die externe Einheit ist in einer Ausgestaltung des Werkzeugmaschinensystems als externe Geräuschemissionssensoreinheit ausgebildet. Es ist eine Geräuschmessung realisierbar, die von der Steuer- und/oder Regeleinheit nutzbar ist, um bei einer Überschreitung eines vorgegebenen Geräuschgrenzwerts beispielsweise eine Drehzahlabsenkung der Antriebseinheit zu steuern und/oder zu regeln. Hierbei kann die externe Einheit beispielsweise als Smartphone ausgebildet sein. Zudem ist die externe Einheit in einer alternativen Ausgestaltung des Werkzeugmaschinensystems als externe Funkenflugerfassungseinheit ausgebildet. Es kann somit vorteilhaft in Abhängigkeit eines erfassten Funkenflugs eine maximale Funkenflugweite eingestellt werden, indem in Abhängigkeit von einem Bearbeitungswerkzeug, einem Werkstoff und/oder einem Anwendungsfall eine Drehzahl der Antriebseinheit durch die Steuer- und/oder Regeleinheit auf eine maximale Flugweite der Funken regelbar ist. Hierzu ist der Funkenflug beispielsweise optisch erfassbar und die Drehzahl zu einer Änderung einer Funkenflugweite anpassbar. Somit sind vorteilhaft Geräuschbelästigungen und/oder Beschädigungen vermeidbar und/oder reduzierbar.

Ferner wird ein Verfahren zu einer Steuerung und/oder Regelung zumindest einer erfindungsgemäßen Werkzeugmaschine vorgeschlagen, wobei das Verfahren zumindest einen Verfahrensschritt umfasst, bei dem die Steuer- und/oder Regeleinheit zumindest einen Bedienerzustand ermittelt und den Bedienerzustand mittels einer Informationsausgabeeinheit ausgibt und/oder zu einer Steuerung und/oder Regelung der Antriebseinheit und/oder zumindest einer Sicherheitsfunktion der Werkzeugmaschine berücksichtigt. Zudem weist das Verfahren vorzugsweise zumindest einen weiteren Verfahrensschritt auf, bei dem die Steuer- und/oder Regeleinheit zumindest einen Werkzeugmaschinenzubehörzustand ermittelt und den Werkzeugmaschinenzubehörzustand mittels einer Informationsausgabeeinheit ausgibt und/oder zu einer Steuerung und/oder Regelung der Antriebseinheit und/oder zumindest einer Sicherheitsfunktion der Werkzeugmaschine berücksichtigt. Somit kann vorteilhaft eine Anpassung einer Steuerung und/oder Regelung einer Antriebseinheit und/oder einer Sicherheitsfunktion an einen Zustand eines Bedieners erfolgen. Somit kann vorteilhaft ein effektiver Schutz eines Bedieners vor Verletzungen ermöglicht werden. Mittels des erfindungsgemäßen Verfahrens kann vorteilhaft eine zumindest im Wesentlichen automatische Einstellung von Betriebsparametern und/oder Betriebsmodi einer Werkzeugmaschine ermöglicht werden. Zudem kann vorteilhaft eine zumindest im Wesentlichen automatische Aktivierung von unterschiedlichen Sicherheitsfunktionen der Werkzeugmaschine ermöglicht werden.

Zudem wird vorgeschlagen, dass die Steuer- und/oder Regeleinheit, insbesondere in zumindest einem Betriebsmodus der tragbaren Werkzeugmaschine, zumindest teilweise automatisch mittels der Kommunikationseinheit auf die zentrale Datenbank zugreift, in der zumindest eine Sicherheits- und/oder Betriebsbereichsregel hinterlegt sind/ist, die zumindest zu einer Steuer- und/oder Regelung der Antriebseinheit von der Steuer- und/oder Regeleinheit verarbeitbar sind/ist. Bevorzugt wertet die Steuer- und/oder Regeleinheit die in der zentralen Datenbank hinterlegten Sicherheits- und/oder Betriebsbereichsregeln automatisch aus und interpretiert die Sicherheits- und/oder Betriebsbereichsregeln automatisch zu einer Steuer- und/oder Regelung der tragbaren Werkzeugmaschine. Besonders bevorzugt sind mittels der Kommunikationseinheit zusätzlich zu einem Zugriff auf die zentrale Datenbank mittels der Kommunikationseinheit elektronische Daten mit zumindest einer externen Einheit austauschbar. Somit kann vorzugsweise ein Datenaustausch zwischen der die Werkzeugmaschinenvorrichtung umfassenden tragbaren Werkzeugmaschine und weiteren externen Einheiten stattfinden, wie beispielsweise ein Datenaustausch zwischen der die Werkzeugmaschinenvorrichtung umfassenden tragbaren Werkzeugmaschine und einer Sensoreinheit einer Arbeitskleidung, einem Smartphone, einem Laptop, einem PC, einem Handheld, einem Tablet, einem Server o. dgl. Hierbei sind bevorzugt insbesondere die mittels der Sensoreinheiten der Werkzeugmaschinenvorrichtung erfassten Kenngrößen und/oder die mittels der Kommunikationseinheit übertragenen Daten austauschbar und/oder zu einer Steuer- und/oder Regelung der die Werkzeugmaschinenvorrichtung umfassenden tragbaren Werkzeugmaschine nutzbar. Die Kommunikationseinheit kann hierbei kabelgebundene und/oder kabellose Schnittstellen und/oder Kommunikationsprotokolle aufweisen und/oder nutzen. Die Schnittstellen und/oder Kommunikationsprotokolle können beispielsweise als USB, als Canbus, als Ethernet, insbesondere mit twisted pair Kabeln (CAT5 oder CAT6), als optisches Übertragungsmedium, als KNX, als Powerline, als NFC (Nahbereichskommunikation), als RFID (Nahbereichskommunikation), als Zigbee (Nahbereichskommunikation), als Bluetooth, insbesondere nach dem Standard 4.0 Low Energy (kurze Reichweite), als WLAN, insbesondere nach dem Standard 801.11n (mittlere Reichweite), als GSM oder LTE (Mobilfunknetz), insbesondere für große Reichweiten, o. dgl. ausgebildet sein. Vorzugsweise ist eine externe Einheit, insbesondere ein Smartphone, als Router ausgebildet, der als Vermittlungsstelle zumindest zwischen der Kommunikationseinheit der Werkzeugmaschinenvorrichtung und der zentralen Datenbank und/oder einer weiteren externen Einheit, vorgesehen ist. Hierbei ist es vorteilhaft ein individuell abgestimmtes Firmensmartphone zu verwenden. Mittels der erfindungsgemäßen Ausgestaltung kann vorteilhaft eine zumindest teilweise automatische Berücksichtigung von Sicherheits- und/oder Betriebsbereichsregeln zu einer Steuer- und/oder Regelung zumindest der Antriebseinheit genutzt werden. Somit kann vorteilhaft ein hoher Bedienkomfort und eine sichere Einhaltung von Sicherheitsfunktionen gewährleistet werden.

Des Weiteren wird vorgeschlagen, dass die Steuer- und/oder Regeleinheit zumindest zu einer Steuer- und/oder Regelung der Antriebseinheit werkzeugmaschinensensorerfasste Daten und/oder kommunikationseinheitsübermittelte Daten nutzt. Bevorzugt sind die werkzeugmaschinensensorerfassten Daten, die von der Steuer- und/oder Regeleinheit zu einer Steuer- und/oder Regelung der Antriebseinheit nutzbar sind, mittels zumindest einer der Sensoreinheiten, insbesondere mittels allen Sensoreinheiten, der Werkzeugmaschinenvorrichtung erfassbar. Vorzugsweise sind die kommunikationseinheitsübermittelten Daten mittels der Kommunikationseinheit von einer externen Einheit und/oder von der zentralen Datenbank an die Steuer- und/oder Regeleinheit übertragbar. Hierbei ist es denkbar, dass die kommunikationseinheitsübermittelten Daten beispielsweise mittels zumindest einer Sensoreinheit einer Arbeitskleidung erfassbar sind und mittels der Kommunikationseinheit empfangbar sind und/oder direkt mittels der Kommunikationseinheit aus der zentralen Datenbank auslesbar sind. Die Sensoreinheiten der Werkzeugmaschinenvorrichtung und/oder der externen Einheit umfassen vorzugsweise jeweils zumindest ein Sensorelement zu einer Erfassung zumindest einer Kenngröße. Das Sensorelement kann hierbei beispielsweise als Lagesensor (Magnetfeldsensor o. dgl., zu einer Erfassung einer Lage im Raum), als Bewegungssensor (Geschwindigkeitssensor, Beschleunigungssensor, Drehratensensor o. dgl.), als GPS-Sensor (X, Y, Z auf Erdoberfläche), als Drucksensor (Dehnmessstreifen o. dgl.), als Gassensor (CO-Sensor; Kohlenmonoxidsensor o. dgl.), als Temperatursensor, als Spannungssensor, als Feuchtigkeitssensor, als pH-Wert-Sensor, als Luftdrucksensor (Barometer), als Pulssensor o. dgl. ausgebildet sein. Mittels der erfindungsgemäßen Ausgestaltung kann vorteilhaft eine Berücksichtigung von ortsabhängigen Sicherheits- und/oder Betriebsbereichsregeln und zudem eine Einbeziehung von werkzeugmaschinensensorerfassten und/oder von kommunikationseinheitsübermittelten Daten zu einer Steuer- und/oder Regelung der tragbaren Werkzeugmaschine genutzt werden. Somit kann vorteilhaft eine hohe Arbeitssicherheit gewährleistet werden.

Ferner wird vorgeschlagen, dass die Steuer- und/oder Regeleinheit in Abhängigkeit von werkzeugmaschinensensorerfassten Daten und/oder von kommunikationseinheitsübermittelten Daten zumindest eine Information mittels einer Informationsausgabeeinheit ausgibt. Somit kann vorteilhaft eine Information an einen Bediener ausgegeben werden, um diesen beispielsweise über eine Zutrittskontrolle zu einem Bereich der Infrastruktur zu informieren. Somit ist vorteilhaft eine Zugangskontrolle zu einem Bereich der Infrastruktur realisierbar. Hierbei ist es denkbar, dass beispielsweise in der zentralen Datenbank hinterlegte Brandschutzregeln dazu führen, dass ein Bediener mit einer bestimmten tragbaren Werkzeugmaschine in definierten Räumen nur mit Genehmigung oder nur in Begleitung einer Werksfeuerwehr arbeiten darf. Zudem ist es vorteilhaft möglich, gefährdete Personen in einer Umgebung und/oder einer unmittelbaren Nähe eines Einsatzorts der tragbaren Werkzeugmaschine mittels optischen und/oder akustischen Signalen zu warnen.

Zudem wird vorgeschlagen, dass die Steuer- und/oder Regeleinheit zumindest eine Betriebsmoduseinstellung der Werkzeugmaschine in Abhängigkeit von werkzeugmaschinensensorerfassten Daten und/oder von kommunikationseinheitsübermittelten Daten steuert und/oder regelt. Somit kann vorteilhaft ein optimaler Betrieb der die Werkzeugmaschinenvorrichtung umfassenden tragbaren Werkzeugmaschine erreicht werden.

Die Steuer- und/oder Regeleinheit interpretiert, kombiniert und/oder wertet vorzugsweise die werkzeugmaschinensensorerfassten Daten und/oder die kommunikationseinheitsübermittelten Daten zu einer Steuer- und/oder Regelung der die Werkzeugmaschinenvorrichtung umfassenden tragbaren Werkzeugmaschine aus. Mittels einer Übertragung von Daten an die zentrale Datenbank ist es vorzugsweise denkbar, dass zumindest teilweise automatisch Arbeitsrapportberichte von Arbeiten erstellbar sind, die von Mitarbeitern des Facility Managements erfassbar und/oder protokollierbar sind. Hierdurch kann vorteilhaft dokumentiert werden, wer, wann, wie lange, mit welcher Art einer tragbaren Werkzeugmaschine an welchem Ort gearbeitet hat. Ereignet sich ein Schadensfall und/oder ein Unfall, so kann vorteilhaft ein automatisch erstelltes Protokoll später für einen Nachweis einer Einhaltung einer Sorgfaltspflicht herangezogen werden.

Infolge einer Festlegung von Gefährdungspotentialen, von Sicherheits- und/oder Betriebsbereichsregeln o. dgl. durch die Health and Safety Engineers (HSE) und/oder das Facility Management (FCM) für Räume, Labore, Werkstätten der Infrastruktur werden in der zentralen Datenbank entsprechende elektronische Daten hinterlegt. Durch die Kommunikation der die Werkzeugmaschinenvorrichtung umfassenden tragbaren Werkzeugmaschine mit der zentralen Datenbank ist beispielsweise mittels einer Ortung von GPS Koordinaten erkennbar, welche tragbare Werkzeugmaschine sich wo innerhalb der Infrastruktur befindet. Insbesondere bei einer zusätzlichen Bedienerdatenübertragung ist insbesondere erfassbar, welcher Bediener, insbesondere mit welchem Ausbildungsstand, sich mit welcher Art einer tragbaren Werkzeugmaschine wo befindet. Hierdurch ist vorteilhaft ein Transportieren einer tragbaren Werkzeugmaschine in einen für diese tragbare Werkzeugmaschine gesperrten Bereich der Infrastruktur erfassbar und die tragbare Werkzeugmaschine ist für eine Inbetriebnahme sperrbar, eine Information an einen Bediener ausgebbar und/oder an die Health and Safety Engineers (HSE) und/oder das Facility Management (FCM) meldbar. Somit kann vorteilhaft eine Zutrittsüberwachung erfolgen. Es kann vorteilhaft überwacht und/oder überprüft werden, in welchen Bereichen der Infrastruktur eine tragbare Werkzeugmaschine eingesetzt werden darf und ob ein Bediener ein Nachweis über eine Nutzungsbefugnis vorlegen muss. Somit kann vorteilhaft eine Überwachung von Regeln hinsichtlich einer Alleinarbeit erfolgen und/oder es kann eine automatische Ein-Mann-Überwachung durch zumindest ein Sensorelement der Arbeitskleidung in Kombination mit Sensoreinheiten der Werkzeugmaschinenvorrichtung erfolgen.

Weiter ist es denkbar, dass in der zentralen Datenbank elektronische Daten durch beispielsweise einen Health and Safety Engineer (HSE) und/oder das Facility Management (FCM) hinterlegt werden, die Grenzwerte für Umgebungsbedingungen definieren, wie beispielsweise Temperaturgrenzwerte, Luft- und/oder Gaskonzentrationsgrenzwerte. Infolge einer Übertragung der elektronischen Daten aus der zentralen Datenbank und einer Übertragung von werkzeugmaschinensensorerfassten Daten an die zentrale Datenbank ist vorteilhaft eine Überwachung und/oder ein Nachweis einer Einhaltung von Grenzwerten möglich.

Ferner ist es denkbar, dass mittels den durch die Kommunikationseinheit übertragenen elektronischen Daten ein Abgleich einer Nutzungsbefugnis erfolgt. Hierbei ist beispielsweise ein Ausbildungs- und/oder Einweisungsnachweis des Bedieners durch eine Eingabe (Chipkarte, RFID-Chip o. dgl.) oder durch ein Abgleich eines in der zentralen Datenbank hinterlegten Bedienerkennungsprofils denkbar, um eine Inbetriebnahme der tragbaren Werkzeugmaschine zu ermöglichen. Falls eine Inbetriebnahme ohne korrekten Nachweis erfolgt, ist die tragbare Werkzeugmaschine beispielsweise sperrbar oder es ist beispielsweise eine Warnung mittels der Informationsausgabeeinheit ausgebbar oder eine Leitzentrale ist informierbar.

Zudem ist es auch denkbar, dass mittels der Kommunikationseinheit Daten der tragbaren Werkzeugmaschine, wie beispielsweise Laufzeit, Vibrationen, Akkukapazität, Kühleinheitsleistung, Motorleistung o. dgl., an eine bedienerseitige Einheit, wie beispielsweise ein User-Interface, eine Armbanduhr, ein Smartphone, eine Datenbrille o. dgl., übermittelbar sind. Die Daten der tragbaren Werkzeugmaschine sind zudem an die zentrale Datenbank übertragbar, um beispielsweise eine Einhaltung von Grenzwerten überwachen zu können. Zudem sind beispielsweise Mitarbeiter einer Fremdfirma, die sich innerhalb der Infrastruktur aufhalten, überwachbar. Somit sind/ist beispielsweise eine Arbeitsdauer und/oder ein Arbeitsort der Mitarbeiter der Fremdfirma protokollierbar. Ferner ist mittels einer Übertragung von elektronischen Daten mittels der Kommunikationseinheit durch die Steuer- und/oder Regeleinheit vorzugsweise ein Bedienerprofil einrichtbar. Hierbei sind vorzugsweise durch die Steuer- und/oder Regeleinheit automatisch bei einer Übertragung von Daten mittels der Kommunikationseinheit Einstellungen der tragbaren Werkzeugmaschine vornehmbar, wie beispielsweise Berechtigungseinstellungen, Einstellung einer bevorzugten Motorkennline, Einstellung eines Ansprechverhaltens von Sicherheitsfunktionen (Kick-Back-Funktion etc.) o. dgl.

Des Weiteren ist insbesondere infolge eines Abgleichs von elektronischen Daten aus der zentralen Datenbank, von werkzeugmaschinensenorerfassten Daten und von mittels zumindest einer Sensoreinheit einer Arbeitskleidung eines Bedieners erfassten Daten eine automatische Überwachung einer Tragepflicht von einer persönlichen Schutzausrüstung (PSA), die beispielsweise einen Helm, zumindest einen Handschuh, zumindest eine Schutzbrille, Sicherheitsschuhe, eine Arbeitshose o. dgl. aufweist, und/oder eine Überwachung einer Einsatzorteinschränkung einer tragbaren Werkzeugmaschine erreichbar. Hierbei ist es denkbar, dass von einer Leitzentrale eine Not-Abschaltung der tragbaren Werkzeugmaschine in einem Bereich der Infrastruktur veranlassbar ist, sobald zumindest eine Vitalkenngröße eines Bedieners einen für einen Bediener kritischen Wert erreicht.

Zudem kann vorteilhaft mittels einer Übertragung von elektronischen Daten von einer zentralen Datenbank aus eine zentrale Updatefunktion für die tragbare Werkzeugmaschine ermöglicht werden. Ferner kann vorteilhaft eine fällige Wartung, wie beispielsweise ein Kohlenwechsel, an eine Leitzentrale übermittelt werden.

Die erfindungsgemäße Werkzeugmaschinenvorrichtung, die erfindungsgemäße Werkzeugmaschine und/oder das erfindungsgemäße Verfahren sollen/soll hierbei nicht auf die oben beschriebene Anwendung und Ausführungsform beschränkt sein. Insbesondere können/kann die erfindungsgemäße Werkzeugmaschinenvorrichtung, die erfindungsgemäße Werkzeugmaschine und/oder das erfindungsgemäße Verfahren zu einer Erfüllung einer hierin beschriebenen Funktionsweise eine von einer hierin genannten Anzahl von einzelnen Elementen, Bauteilen, Einheiten und/oder Verfahrensschritten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine, die als Winkelschleifer ausgebildet ist, mit zumindest einer erfindungsgemäßen Werkzeugmaschinenvorrichtung in einer schematischen Darstellung,
- Fig. 2: eine schematische Darstellung der erfindungsgemäßen Werkzeugmaschinenvorrichtung,
- Fig. 3: eine schematische Darstellung einer alternativen erfindungsgemäßen Werkzeugmaschinenvorrichtung,
- Fig. 4: eine alternative erfindungsgemäße Werkzeugmaschine, die als Bohrund/oder Meißelhammer ausgebildet ist, mit einer erfindungsgemäßen Werkzeugmaschinenvorrichtung in einer schematischen Darstellung,
- Fig. 5: eine weitere alternative erfindungsgemäße Werkzeugmaschine, die als Akkuschrauber ausgebildet ist, mit einer erfindungsgemäßen Werkzeugmaschinenvorrichtung in einer schematischen Darstellung und
- Fig. 6: eine weitere alternative erfindungsgemäße Werkzeugmaschine, die als Stichsäge ausgebildet ist, mit einer erfindungsgemäßen Werkzeugmaschinenvorrichtung in einer schematischen Darstellung.

### Beschreibung der Ausführungsbeispiele

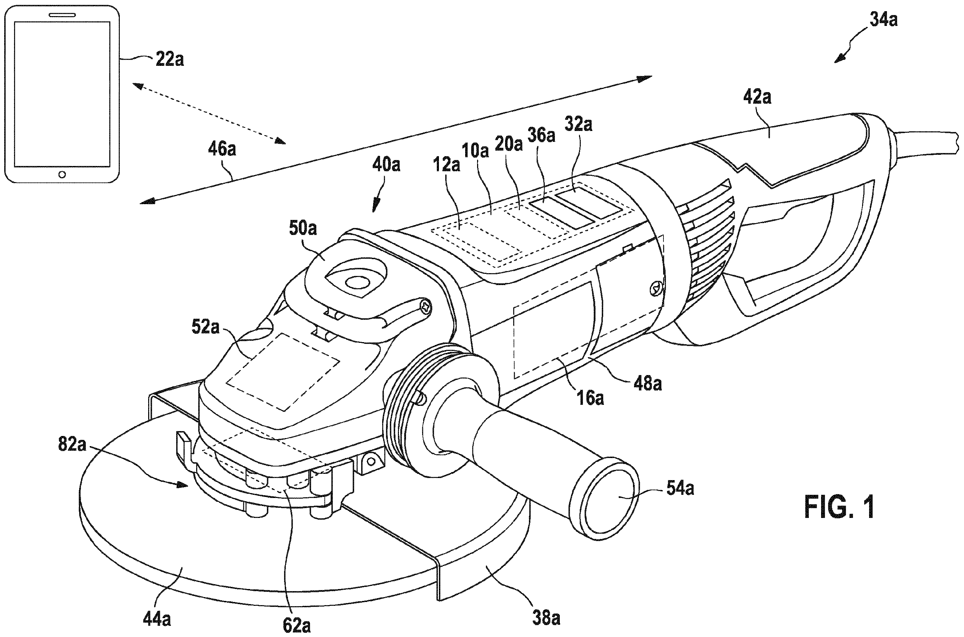

Figur 1 zeigt eine Werkzeugmaschine 34a mit zumindest einer Werkzeugmaschinenvorrichtung 10a. Die Werkzeugmaschine 34a ist als tragbare Werkzeugmaschine ausgebildet. Hierbei ist die Werkzeugmaschine 34a als Winkelschleifer ausgebildet. Somit umfasst die Werkzeugmaschine 34a zumindest eine als Schutzhaubeneinheit ausgebildete Werkzeugmaschinenzubehöreinheit 38a. Ferner umfasst die Werkzeugmaschine 34a zumindest ein Werkzeugmaschinengehäuse 40a und einen Haupthandgriff 42a, der sich an einer einem Bearbeitungswerkzeug 44a abgewandten Seite des Werkzeugmaschinengehäuses 40a in Richtung einer Haupterstreckungsrichtung 46a der Werkzeugmaschine 34a erstreckt. Das Bearbeitungswerkzeug 44a ist hierbei als Schleifscheibe ausgebildet. Es ist jedoch auch denkbar, dass das Bearbeitungswerkzeug 44a als Trenn- oder Polierscheibe ausgebildet ist. Das Werkzeugmaschinengehäuse 40a umfasst ein Motorgehäuse 48a zu einer Aufnahme einer Antriebseinheit 16a der Werkzeugmaschine 34a. Ferner umfasst das Werkzeugmaschinengehäuse 40a ein Getriebegehäuse 50a zu einer Aufnahme einer Abtriebseinheit 52a der Werkzeugmaschine 34a. Die Antriebseinheit 16a ist dazu vorgesehen, das Bearbeitungswerkzeug 44a über die Abtriebseinheit 52a rotierend anzutreiben. An dem Getriebegehäuse 50a ist eine weitere als Zusatzhandgriffeinheit ausgebildete Werkzeugmaschinenzubehöreinheit 54a angeordnet. Die als Zusatzhandgriffeinheit ausgebildete Werkzeugmaschinenzubehöreinheit 54a erstreckt sich quer zur Haupterstreckungsrichtung 46a der Werkzeugmaschine 34a.

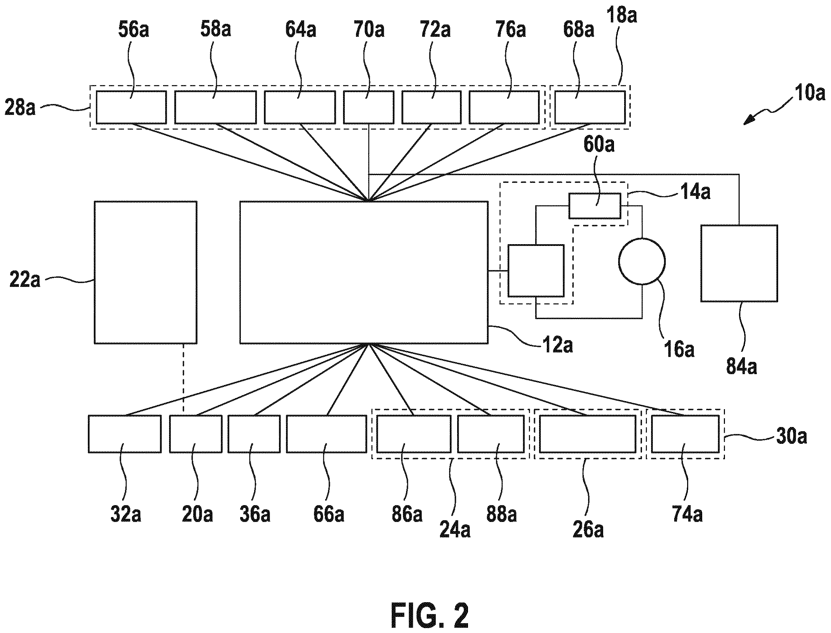

Die Werkzeugmaschinenvorrichtung 10a ist als Handwerkzeugmaschinenvorrichtung ausgebildet. Die Werkzeugmaschinenvorrichtung 10a umfasst vorzugsweise eine Energieversorgungsvorrichtung 84a (Figur 2). Somit ist die Werkzeugmaschinenvorrichtung 10a unabhängig von einer Energieversorgung der Werkzeugmaschine 34a betreibbar. Es ist jedoch auch denkbar, dass in einer alternativen Ausgestaltung der Werkzeugmaschinenvorrichtung 10a die Werkzeugmaschinenvorrichtung 10a mittels einer Energieversorgungsvorrichtung der Werkzeugmaschine 34a mit Energie versorgbar ist. Die Werkzeugmaschinenvorrichtung 10a umfasst ferner zumindest eine Steuer- und/oder Regeleinheit 12a und zumindest eine Antriebseinheitssensoreinheit 14a zu einer Erfassung zumindest einer Antriebseinheitskenngröße, die zumindest zu einer Steuerung und/oder Regelung einer Antriebseinheit 16a der Werkzeugmaschine 34a und/oder zu einer Informationsausgabe an einen Bediener von der Steuer- und/oder Regeleinheit 12a verarbeitbar ist. Die Steuer- und/oder Regeleinheit 12a ist in zumindest einem Betriebsmodus der Werkzeugmaschine 34a zu einer Steuerung und/oder Regelung der Antriebseinheit 16a in Abhängigkeit von der zumindest einen mittels der Antriebseinheitssensoreinheit 14a erfassten Antriebseinheitskenngröße vorgesehen. Ferner ist die Antriebseinheitssensoreinheit 14a dazu vorgesehen, zumindest eine als Lüftungskenngröße ausgebildete Antriebseinheitskenngröße und/oder eine als Bedienergefährdungskenngröße ausgebildete Antriebseinheitskenngröße zu erfassen.

Des Weiteren umfasst die Werkzeugmaschinenvorrichtung 10a zumindest eine Bedienersensoreinheit 18a zu einer Erfassung zumindest einer bedienerspezifischen Kenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Steuer- und/oder Regeleinheit 12a ist zu einer Steuerung und/oder Regelung der Antriebseinheit 16a in Abhängigkeit von der zumindest einen mittels der Bedienersensoreinheit 18a erfassten bedienerspezifischen Kenngröße und in Abhängigkeit von der zumindest einen mittels der Antriebseinheitssensoreinheit 14a erfassten Antriebseinheitskenngröße vorgesehen.

Ferner umfasst die Werkzeugmaschinenvorrichtung 10a zumindest eine Werkzeugmaschinenzubehörsensoreinheit 26a zu einer Erfassung zumindest einer Werkzeugmaschinenzubehörkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Steuer- und/oder Regeleinheit 12a ist in zumindest einem Betriebsmodus der Werkzeugmaschine 34a zu einer Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels Bedienersensoreinheit 18a erfassten bedienerspezifischen Kenngröße und in Abhängigkeit von der zumindest einen mittels der Werkzeugmaschinenzubehörsensoreinheit 26a erfassten Werkzeugmaschinenzubehörkenngröße vorgesehen. Ferner umfasst die Werkzeugmaschinenvorrichtung 10a zumindest eine Bearbeitungswerkzeugsensoreinheit 28a zu einer Erfassung zumindest einer Bearbeitungswerkzeugkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Hierbei ist die Steuer- und/oder Regeleinheit 12a zumindest in einem Anlernstartbetriebsmodus zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 28a erfassten Bearbeitungswerkzeugkenngröße, in Abhängigkeit von der zumindest einen mittels Bedienersensoreinheit 18a erfassten bedienerspezifischen Kenngröße und in Abhängigkeit von der zumindest einen mittels der Werkzeugmaschinenzubehörsensoreinheit 26a erfassten Werkzeugmaschinenzubehörkenngröße vorgesehen. Der Anlernstartbetriebsmodus ist automatisch nach einer Inbetriebnahme der Werkzeugmaschine 34a bis zu einem Erreichen einer Leerlaufdrehzahl aktiviert. Über zumindest einen Trägheitssensor 56a der Bearbeitungswerkzeugsensoreinheit 28a, zumindest einen Drehmomentsensor 58a der Bearbeitungswerkzeugsensoreinheit 28a und/oder einen Stromsensor 60a der Antriebseinheitssensoreinheit 14a ist eine Schwungmasse des Bearbeitungswerkzeugs 44a mittels der Steuer- und/oder Regeleinheit 12a ermittelbar (Figur 2). Der Trägheitssensor 56a ist vorzugsweise als dreiachsiger Beschleunigungssensor ausgebildet. Über zumindest ein in einer Speichereinheit (hier nicht näher dargestellt) der Steuer- und/oder Regeleinheit 12a abgelegtes Kennfeld ist die ermittelte Schwungmasse eindeutig einer bestimmten Bearbeitungswerkzeugart zuordenbar. Zudem ist es denkbar, dass eine Erfassung von weiteren Bearbeitungswerkzeugkenngrößen zusätzlich über RFID, NFC, Scannen eines Barcodes, DataMatrix-Codes o.ä. erfolgt. In Abhängigkeit von dem durch die Steuer- und/oder Regeleinheit 12a ermittelten Bearbeitungswerkzeug 44a sind Antriebseinheitsparameter zu einer Steuerung und/oder Regelung der Antriebseinheit 16a anpassbar und/oder veränderbar.

Im Anlernstartbetriebsmodus der Werkzeugmaschine 34a ist eine für das Bearbeitungswerkzeug 44a optimale Drehzahl in Abhängigkeit von einem Material (Stahl, Edelstahl, Stein, Beton, Holz usw.) eines zu bearbeitenden Werkstücks mittels der Steuer- und/oder Regeleinheit 12a zumindest teilweise automatisch einstellbar. Hierzu umfasst die Werkzeugmaschinenvorrichtung 10a zumindest eine Werkstücksensoreinheit 30a zu einer Erfassung zumindest einer Werkstückkenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Hierzu umfasst die Werkstücksensoreinheit 30a zumindest ein Werkstücksensorelement 74a (Figur 2). Die Steuer- und/oder Regeleinheit 12a ist hierbei zumindest im Anlernstartbetriebsmodus zu einer zumindest teilweise automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bedienersensoreinheit 18a erfassten bedienerspezifischen Kenngröße, in Abhängigkeit von der zumindest einen mittels der Bearbeitungswerkzeugsensoreinheit 28a erfassten Bearbeitungswerkzeugkenngröße, in Abhängigkeit von der zumindest einen mittels der Werkzeugmaschinenzubehörsensoreinheit 26a erfassten Werkzeugmaschinenzubehörkenngröße und in Abhängigkeit von der zumindest einen mittels der Werkstücksensoreinheit 30a erfassten Werkstückkenngröße vorgesehen.

Ferner sind im Anlernstartbetriebsmodus der Werkzeugmaschine 34a Auffälligkeiten hinsichtlich einer Vibration des Bearbeitungswerkzeugs 44a während eines Hochfahrens bis zu einer Leerlaufdrehzahl der Antriebseinheit 16a erfassbar. Hierdurch ist eine falsche Montage, ein Verschleiß und/oder ein Defekt des Bearbeitungswerkzeugs 44a erfassbar. Mittels der Steuer- und/oder Regeleinheit 12a ist somit über eine Informationsausgabeeinheit 36a der Werkzeugmaschinenvorrichtung 10a eine Information an einen Bediener ausgebbar und/oder die Antriebseinheit 16a ist aktiv abbremsbar und/oder eine Energieversorgung zur Antriebseinheit 16a ist unterbrechbar. Zudem ist infolge einer Ermittlung des Bearbeitungswerkzeugs 44a eine maximal für das Bearbeitungswerkzeug 44a geeignete Drehzahl der Antriebseinheit 16a einstellbar. Somit ermittelt die Steuer- und/oder Regeleinheit 12a zumindest im Anlernstartbetriebsmodus einen Bearbeitungswerkzeugzustand und gibt den Bearbeitungswerkzeugzustand mittels der Informationsausgabeeinheit 36a aus und/oder berücksichtigt den Bearbeitungswerkzeugzustand zu einer Steuerung und/oder Regelung der Antriebseinheit 16a der Werkzeugmaschine 34a.

Zudem weist die Werkzeugmaschine 34a zumindest eine Bearbeitungswerkzeugsicherungseinheit 62a auf, die zumindest ein Sicherungselement (hier nicht näher dargestellt) zu einer Sicherung des Bearbeitungswerkzeugs 44a an einer Werkzeugaufnahme 82a der Werkzeugmaschine 34a umfasst. Hierbei weist die Bearbeitungswerkzeugsensoreinheit 28a zumindest ein Sicherungssensorelement 64a auf, das dazu vorgesehen ist, eine sichere Befestigung des Bearbeitungswerkzeugs 44a an der Werkzeugaufnahme 82a zu überwachen. Erfasst das Sicherungssensorelement 64a einen gelösten Zustand des Bearbeitungswerkzeugs 44a, ist mittels der Steuer- und/oder Regeleinheit 12a eine Energieversorgung der Antriebseinheit 16a unterbindbar. Somit ist eine Inbetriebnahme der Antriebseinheit 16a gesperrt. Hierbei ist denkbar, dass eine Antriebsspindel und/oder eine Spannmutter der Werkzeugmaschine 34a eine Bohrung aufweist, in die das Sicherungselement einführbar ist, insbesondere über einen Stellmotor einführbar, dessen Position mittels des Sicherungssensorelements 64a erfassbar ist. Ferner ist auch denkbar, dass ein als Spannmutter ausgebildetes Sicherungselement mittels einer zumindest teilweise automatischen Anzieheinheit bis zu einem definierten Drehmoment vorspannbar ist, wobei das Drehmoment mittels des Drehmomentsensors 58a erfassbar ist.

Des Weiteren ist in einer Ausgestaltung der Werkzeugmaschinenvorrichtung 10a in dem als Spannmutter ausgebildeten Sicherungselement ein Schwingungserregerelement 66a (Figur 2) der Werkzeugmaschinenvorrichtung 10a angeordnet, mittels dessen eine sichere Anordnung des Bearbeitungswerkzeugs 44a auf der Antriebsspindel überprüfbar ist. Das Schwingungserregerelement 66a kann als Smart-Material-Element, als Piezo-Element, als Schwingspulenelement oder als ein anderes, einem Fachmann als sinnvoll erscheinendes Erregerelement ausgebildet sein. Hierbei ist das Bearbeitungswerkzeug 44a mittels des Schwingungserregerelements 66a in Schwingung versetzbar, die mittels der Bearbeitungswerkzeugsensoreinheit 28a erfassbar ist und mittels der Steuer- und/oder Regeleinheit 12a auswertbar ist. Das Bearbeitungswerkzeug 44a ist ferner mittels der Steuer- und/oder Regeleinheit 12a in Abschnitte unterteilbar, wobei jeder Abschnitt einzeln hinsichtlich einer Schwingung durch die Steuer- und/oder Regeleinheit 12a auswertbar ist. Somit kann vorteilhaft eine Beschädigung des Bearbeitungswerkzeugs 44a in einem Abschnitt erkannt werden. Weitere, einem Fachmann als sinnvoll erscheinende Ausgestaltungen zu einer Erfassung von Bearbeitungswerkzeugkenngrößen sind ebenfalls denkbar.

Die Werkzeugmaschinenvorrichtung 10a umfasst ferner zumindest eine Umgebungssensoreinheit 24a zu einer Erfassung zumindest einer Umgebungskenngröße, die zumindest zu einer Steuerung und/oder Regelung der Antriebseinheit 16a und/oder zu einer Informationsausgabe an einen Bediener von der Steuer- und/oder Regeleinheit 12a verarbeitbar ist. Die Umgebungssensoreinheit 24a umfasst hierbei zumindest einen Lagesensor 86a, der eine Ausrichtung der Werkzeugmaschine 34a im Raum erfasst. Der Lagesensor 86a ist vorzugsweise als dreiachsiger Bewegungssensor ausgebildet. Es ist jedoch auch denkbar, dass der Lagesensor 86a eine andere, einem Fachmann als sinnvoll erscheinende Ausgestaltung aufweist. Zudem weist die Umgebungssensoreinheit 24a zumindest einen Standortbestimmungssensor 88a auf, der eine globale Position der Werkzeugmaschine 34a erfasst. Der Standortbestimmungssensor 88a ist vorzugsweise als GPS-Sensor ausgebildet. Es ist jedoch auch denkbar, dass der Standortbestimmungssensor 88a eine andere, einem Fachmann als sinnvoll erscheinende Ausgestaltung aufweist.

Ferner umfasst die Werkzeugmaschinenvorrichtung 10a zumindest eine Eingabeeinheit 32a zu einer Eingabe zumindest einer Bearbeitungskenngröße, die zumindest zu einer Steuerung und/oder Regelung der Antriebseinheit 16a von der Steuer- und/oder Regeleinheit 12a verarbeitbar ist. Mittels der Eingabeeinheit 32a ist zumindest eine Steuerung und/oder Regelung der Antriebseinheit 16a durch die Steuer- und/oder Regeleinheit 12a beeinflussbar. Zudem ist mittels der Eingabeeinheit 32a ein Betriebsmodus der Werkzeugmaschine 34a einstellbar. Hierbei weist die Werkzeugmaschine 34a zumindest den Anlernstartbetriebsmodus, einen Lernbetriebsmodus, einen Referenzbetriebsmodus, einen Sicherheitsbetriebsmodus, einen Synchronisationsbetriebsmodus und/oder einen Automatikbetriebsmodus auf. Hierbei ist die Steuer- und/oder Regeleinheit 12a zumindest im Sicherheitsbetriebsmodus zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bedienersensoreinheit 18a erfassten bedienerspezifischen Kenngröße, in Abhängigkeit von der zumindest einen mittels der Bearbeitungswerkzeugsensoreinheit 28a erfassten Bearbeitungswerkzeugkenngröße, in Abhängigkeit von der zumindest einen mittels der Werkzeugmaschinenzubehörsensoreinheit 26a erfassten Werkzeugmaschinenzubehörkenngröße, in Abhängigkeit von der zumindest einen mittels der Umgebungssensoreinheit 24a erfassten Umgebungskenngröße, in Abhängigkeit von den zumindest mittels einer Kommunikationseinheit 20a der Werkzeugmaschinenvorrichtung 10a empfangenen elektronischen Daten und in Abhängigkeit von der zumindest einen mittels der Werkstücksensoreinheit 30a erfassten Werkstückkenngröße vorgesehen.

Mittels des Lagesensors 86a der Umgebungssensoreinheit 24a ist eine Ausrichtung der Werkzeugmaschine 34a im Raum erfassbar. Somit ist mittels der Steuer- und/oder Regeleinheit 12a beispielsweise ein Überkopfarbeiten mit der Werkzeugmaschine 34a erkennbar, was ein höheres Verletzungsrisiko für einen Bediener birgt als ein Arbeiten mit der Werkzeugmaschine 34a, bei dem der Bediener die Werkzeugmaschine 34a unterhalb seines Kopfs handhabt. Bei einer Erkennung eines Überkopfarbeitens ist der Sicherheitsbetriebsmodus automatisch von der Steuer- und/oder Regeleinheit 12a aktivierbar, falls dieser bisher unaktiviert ist. Im Sicherheitsbetriebsmodus werden Sicherheitsfunktionen schneller aktiviert als in anderen Betriebsmodi der Werkzeugmaschine 34a.

Ferner ist mittels des Standortbestimmungssensors 88a der Umgebungssensoreinheit 24a eine globale Position der Werkzeugmaschine 34a erfassbar. Somit ist mittels der Steuer- und/oder Regeleinheit 12a in Abhängigkeit von einer mittels der Kommunikationseinheit 20a übertragenen Ortskenngröße und in Abhängigkeit von einer mittels des Standortbestimmungssensors 88a erfassten globalen Position der Werkzeugmaschine auswertbar, ob sich die Werkzeugmaschine 34a in einem sicherheitsgefährlichen Bereich befindet und hier eine beschränkte Bearbeitung von Werkstücken erlaubt ist. Bei einer Erkennung einer globalen Position in einem sicherheitsgefährlichen Bereich ist von der Steuer- und/oder Regeleinheit 12a eine Notwendigkeit zu einer automatischen Aktivierung des Sicherheitsbetriebsmodus auswertbar, falls dieser bisher unaktiviert ist. Hierbei adaptiert die Steuer- und/oder Regeleinheit 12a zumindest einen in einer Speichereinheit der Steuer- und/oder Regeleinheit 12a abgespeicherten Parameter zu einer Steuerung und/oder Regelung der Antriebseinheit 16a zumindest in Abhängigkeit von zumindest der mittels der Umgebungssensoreinheit 24a erfassten und als globale Position ausgebildeten Umgebungskenngröße.

Zudem ist in Abhängigkeit einer Erfassung eines Bedienerzustands mittels der Bedienersensoreinheit 18a und/oder einer Übertragung eines Bedienerzustands, wie beispielsweise eines Ausbildungsstands eines Bedieners, von einer externen Einheit 22a mittels der Kommunikationseinheit 20a auf die Steuer- und/oder Regeleinheit 12a der Sicherheitsbetriebsmodus automatisch von der Steuer- und/oder Regeleinheit 12a aktivierbar, falls dieser bisher unaktiviert ist.

Zudem ist mittels der Bedienersensoreinheit 18a eine Position von beiden Händen eines Bedieners erfassbar. Im Sicherheitsbetriebsmodus ist eine Energieversorgung der Antriebseinheit 16a bei einer Einhandbedienung des Bedieners bei einer vorgeschriebenen Zweihandbedienung der Werkzeugmaschine 34a unterbrechbar. Zudem ist es denkbar, dass eine Einrastfunktion zu einer Einrastung eines Bedienelements der Werkzeugmaschine 34a im Sicherheitsbetriebsmodus deaktiviert ist und lediglich eine Totmannfunktion aktiviert ist. Somit kann vorteilhaft eine sichere Führung der Werkzeugmaschine 34a erreicht werden.

Die Bedienersensoreinheit 18a umfasst zudem zumindest ein Bedienersensorelement 68a (Figur 2), das dazu vorgesehen ist, zumindest eine bedienerspezifische Kenngröße zu erfassen. Das Bedienersensorelement 68a ist hierbei als Schwingungssensor, insbesondere als dreiachsiger Beschleunigungssensor, ausgebildet. Mittels der Bedienersensoreinheit 18a ist insbesondere eine auf einen Bediener einwirkende Schwingung am Werkzeugmaschinengehäuse 40a und/oder am Haupthandgriff 42a erfassbar. Mittels der Steuer- und/oder Regeleinheit 12a ist hierbei bei einem Erreichen einer Resonanz und/oder einem maximalen Schwingungswert eine Drehzahl änderbar. Zudem ist mittels der Bedienersensoreinheit 18a ein Anpressdruck und/oder eine Anpresskraft eines Bedieners auf die Werkzeugmaschine 34a erfassbar. Somit kann vorteilhaft eine sichere Führung der Werkzeugmaschine 34a überwacht werden. Zudem ist im Sicherheitsbetriebsmodus eine Schutzhaubeneinheitsposition der Schutzhaubeneinheit mittels der Steuer- und/oder Regeleinheit 12a aktiv veränderbar, insbesondere infolge einer Erfassung einer Position der Schutzhaubeneinheit durch die Werkzeugmaschinenzubehörsensoreinheit 26a. Im Sicherheitsbetriebsmodus ermittelt die Steuer- und/oder Regeleinheit 12a somit zumindest einen Bedienerzustand und gibt den Bedienerzustand mittels der Informationsausgabeeinheit 36a aus und/oder den Bedienerzustand berücksichtigt zu einer Steuerung und/oder Regelung der Antriebseinheit 16a und/oder zumindest einer Sicherheitsfunktion der Werkzeugmaschine 34a.

Zudem ist mittels der Bedienersensoreinheit 18a eine als Puls und/oder eine als Körpertemperatur ausgebildete bedienerspezifische Kenngröße eines Bedieners erfassbar, die/der zu einer Bewertung beispielsweise eines Müdigkeitsstadiums des Bedieners von der Steuer- und/oder Regeleinheit 12a nutzbar sind/ist. Ferner sind mittels der Kommunikationseinheit 20a elektronische Daten hinsichtlich einer Sicherheitskleidung und/oder -ausrüstung eines Bedieners an die Steuer- und/oder Regeleinheit 12a übertragbar. Somit ist in Abhängigkeit der bedienerspezifischen Kenngröße und in Abhängigkeit von den elektronischen Daten mittels der Steuer- und/oder Regeleinheit 12a eine Aktivierungsnotwendigkeit des Sicherheitsbetriebsmodus auswertbar. Zudem sind hierzu ebenfalls Kenngrößen der Umgebungssensoreinheit 24a, der Werkzeugmaschinenzubehörsensoreinheit 26a, der Bearbeitungswerkzeugsensoreinheit 28a und/oder der Werkstücksensoreinheit 30a einbeziehbar. Ferner ist die Steuer- und/oder Regeleinheit 12a dazu vorgesehen, zumindest in Abhängigkeit von der zumindest einen bedienerspezifischen Kenngröße eine von einem Bediener unbeherrschte Bedienung der Werkzeugmaschine 34a zu erkennen. Zudem ist die Steuer- und/oder Regeleinheit 12a dazu vorgesehen, zumindest in Abhängigkeit von zumindest einer mittels der Bedienersensoreinheit 18a erfassten bedienerspezifischen Kenngröße mittels der Kommunikationseinheit 20a zumindest ein Notsignal auszugeben, insbesondere bei einer Erkennung einer Gefährdung und/oder einer Verletzung eines Bedieners. Des Weiteren ist die Steuer- und/oder Regeleinheit 12a dazu vorgesehen, zumindest in Abhängigkeit von einer als Bedienerbelastung ausgebildeten bedienerspezifischen Kenngröße, insbesondere von einer als Bedienervibrationsbelastung ausgebildete bedienerspezifischen Kenngröße, die Antriebseinheit 16a zu steuern und/oder zu regeln und/oder eine Information mittels der Informationsausgabeeinheit an einen Bediener auszugeben.

Ferner ist die Steuer- und/oder Regeleinheit 12a dazu vorgesehen, mittels der Kommunikationseinheit 20a auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit 16a von der Steuer- und/oder Regeleinheit 12a verarbeitbar sind/ist. Hierbei greift die Steuer- und/oder Regeleinheit 12a in zumindest einem Betriebsmodus zumindest teilweise automatisch mittels der Kommunikationseinheit 20a auf die zentrale Datenbank zu, in der zumindest eine Sicherheits- und/oder Betriebsbereichsregel hinterlegt sind/ist, die zumindest zu einer Steuer- und/oder Regelung der Antriebseinheit 16a von der Steuer- und/oder Regeleinheit 12a verarbeitbar sind/ist. Somit nutzt die Steuer- und/oder Regeleinheit 12a zumindest zu einer Steuer- und/oder Regelung der Antriebseinheit 16a werkzeugmaschinensensorerfasste Daten und/oder kommunikationseinheitsübermittelte Daten. Ferner gibt die Steuer- und/oder Regeleinheit 12a in Abhängigkeit von werkzeugmaschinensensorerfassten Daten und/oder kommunikationseinheitsübermittelten Daten zumindest eine Information mittels einer Informationsausgabeeinheit 36a der Werkzeugmaschinenvorrichtung 10a aus, insbesondere zu einer Information eines Bedieners über einen Werkzeugmaschinenzustand und/oder zu einer Warnung vor einer Gefährdung. Zudem steuert und/oder regelt die Steuer- und/oder Regeleinheit 12a zumindest eine Betriebsmoduseinstellung der Werkzeugmaschine in Abhängigkeit von kommunikationseinheitsübermittelten Daten.

Im Lernbetriebsmodus ist die Steuer- und/oder Regeleinheit 12a zu einer zumindest teilweisen automatischen Steuerung und/oder Regelung der Antriebseinheit 16a in Abhängigkeit von der zumindest einen mittels der Antriebseinheitssensoreinheit 14a erfassten Antriebseinheitskenngröße, in Abhängigkeit von der zumindest einen mittels der Bearbeitungswerkzeugsensoreinheit 28a erfassten Bearbeitungswerkzeugkenngröße, in Abhängigkeit von der zumindest einen mittels der Werkzeugmaschinenzubehörsensoreinheit 26a erfassten Werkzeugmaschinenzubehörkenngröße vorgesehen. Der Lernbetriebsmodus wird hierbei nach einem Aktivieren mittels der Eingabeeinheit 32a bis zu einem Umschalten in einen anderen Betriebsmodus der Werkzeugmaschine 34a oder bis zu einem Abschalten der Werkzeugmaschine 34 durchgeführt. Solange der Lernbetriebsmodus aktiviert ist, werden alle oben genannten Kenngrößen mittels den jeweiligen Sensoreinheiten ständig überwacht und Parameter und/oder Kennlinien der Antriebseinheit 16a mittels der Steuer- und/oder Regeleinheit 12a angepasst.

Im Synchronisationsbetriebsmodus der Werkzeugmaschine 34a ist zumindest im Wesentlichen automatisch eine Verbindung zur externen Einheit 22a herstellbar. Hierzu umfasst die Werkzeugmaschinenvorrichtung 10a zumindest die Kommunikationseinheit 20a zu einer Kommunikation mit zumindest der externen Einheit 22a zu einem Austausch von elektronischen Daten zumindest zu einer Steuerung und/oder Regelung der Antriebseinheit 16a. Es sind hierbei Kennlinienfelder zu einer Steuerung und/oder Regelung der Antriebseinheit 16a mittels der Kommunikationseinheit 20a übertragbar. Hierbei sind Parameter und/oder Kennlinien zu einer Steuerung und/oder Regelung der Antriebseinheit 16a in der externen Einheit 22a hinterlegt, die infolge einer Verbindung zwischen der externen Einheit 22a und der Kommunikationseinheit 20a an die Steuer- und/oder Regeleinheit 12a übertragbar sind. Bei den Parametern und/oder Kennlinien kann es sich um individuelle Einstellungen eines Bedieners, wie beispielsweise ein schnelles Hochlaufen bis zu einer gewünschten Drehzahl der Antriebseinheit 16a, um Vorgaben einer Firma, wie beispielsweise eine Bearbeitung von Werkstücken ist in einem gefährdeten Bereich nur unter Einhaltung von Sicherheitszubehör durchführbar o. dgl. handeln.

Hierbei ist im Synchronisationsbetriebsmodus ein Abgleich eines Auftrags eines Bedieners mit einem in der externen Einheit 22a hinterlegten Bearbeitungsauftrag erreichbar. Es findet ein Abgleich von der im Auftrag genannten Werkzeugart, Bearbeitungsart, Werkstückart usw. statt. Zudem ist im Synchronisationsbetriebsmodus eine Zugangsberechtigung erteilbar und/oder in Abhängigkeit einer Zugangsberechtigung ist eine Inbetriebnahme der Werkzeugmaschine 34a sperrbar und/oder freigebbar. Im Synchronisationsbetriebsmodus erfolgt zudem eine Übertragung von Arbeitsortkenngrößen, die hinsichtlich einer Aktivierung des Sicherheitsbetriebsmodus durch die Steuer- und/oder Regeleinheit 12a auswertbar sind.

Zudem sind im Synchronisationsbetriebsmodus Vibrationswerte, die mittels der Bedienersensoreinheit 18a erfassbar sind, an die externe Einheit 22a übermittelbar, die zu einer Bezahlung von Zulagen oder zu einer Überwachung einer Vibrationsdosis eines Bedieners pro Tag nutzbar sind. Ferner ist eine Laufzeit und eine Belastungsart der Werkzeugmaschine 34a erfassbar, die an die externe Einheit 22a übermittelbar sind. Hierdurch ist mittels der Informationsausgabeeinheit 36a ein Vorschlag für ein anderes Bearbeitungswerkzeug und/oder eine andere Werkzeugmaschine o. dgl. ausgebbar.

Im Automatikbetriebsmodus der Werkzeugmaschine 34a werden die oben genannten Betriebsmodi automatisch von der Steuer- und/oder Regeleinheit 12a ausgewählt, insbesondere in Abhängigkeit von erfassten Kenngrößen, die mittels den oben genannten Sensoreinheiten ermittelbar sind. Es erfolgt im Automatikbetriebsmodus eine zumindest im Wesentlichen automatische Steuerung und/oder Regelung der Antriebseinheit 16a durch die Steuer- und/oder Regeleinheit 12a in Abhängigkeit von der Bearbeitungswerkzeugsensoreinheit 28a, von der Bedienersensoreinheit 18a, von der Werkstücksensoreinheit 30a, von der Werkzeugmaschinenzubehörsensoreinheit 26a und von der Umgebungssensoreinheit 24a. Die Steuer- und/oder Regeleinheit 12a ist hierbei in zumindest einem Betriebsmodus dazu vorgesehen, in Abhängigkeit von zumindest einer mittels der Werkstücksensoreinheit 30a erfassten Werkstückkenngröße, die einen in einem Werkstück befindlichen Gegenstand definiert, die Antriebseinheit 16a zu steuern und/oder zu regeln.

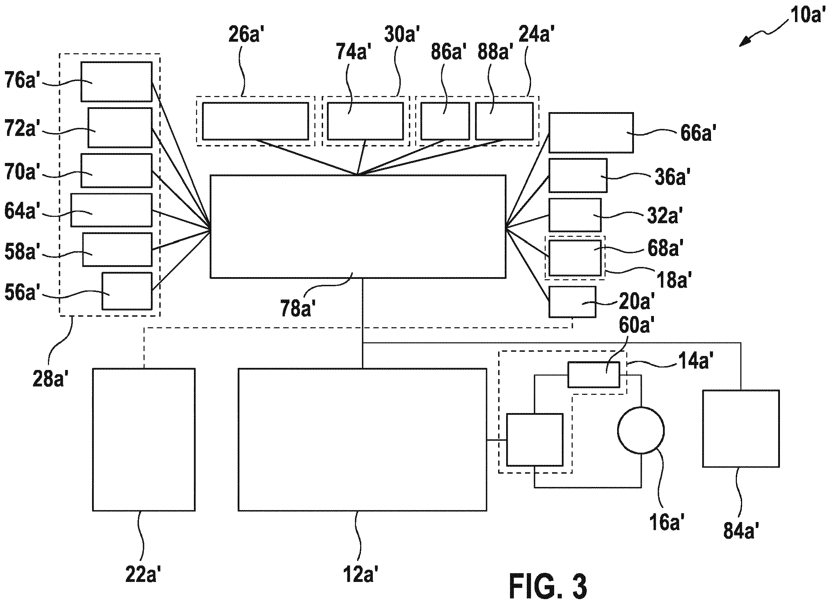

In Figur 3 ist eine alternative Werkzeugmaschinenvorrichtung 10a' dargestellt. Die alternative Werkzeugmaschinenvorrichtung 10a' weist eine zumindest im Wesentlichen analoge Ausgestaltung im Vergleich zu der in der Figur 2 schematisch dargestellten Werkzeugmaschinenvorrichtung 10a auf. Im Unterschied zu der in der Figur 2 schematisch dargestellten Werkzeugmaschinenvorrichtung 10a weist die in Figur 3 schematisch dargestellte alternative Werkzeugmaschinenvorrichtung 10a' zumindest eine Vorverarbeitungseinheit 78a' auf. Die Vorverarbeitungseinheit 78a' ist dazu vorgesehen, eine Kommunikation von mehreren Sensorelementen und/oder Sensoreinheiten der alternativen Werkzeugmaschinenvorrichtung 10a' untereinander und/oder mit einer Steuer- und/oder Regeleinheit 12a' der alternativen Werkzeugmaschinenvorrichtung 10a' zu organisieren. Hierbei ist die Vorverarbeitungseinheit 78a' dazu vorgesehen, einzelne Sensorsignale zu bündeln und Vorentscheidungen zu treffen. Eine Kommunikation zwischen der Vorverarbeitungseinheit 78a' und der Steuer- und/oder Regeleinheit 12a' kann hierbei kabellos und/oder kabelgebunden erfolgen.

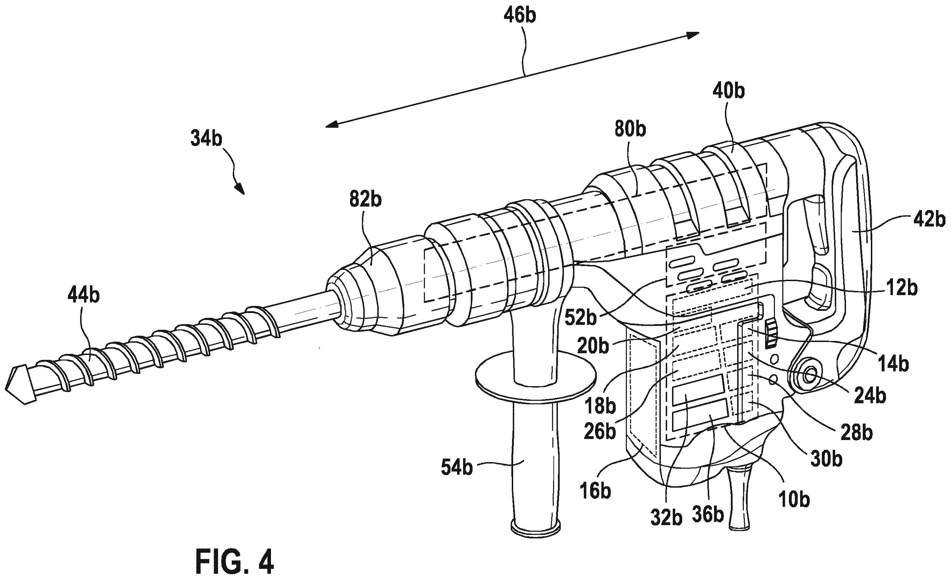

Figuren 4 bis 6 zeigen weitere Ausführungsbeispiele der Erfindung. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnung und/oder die Beschreibung der anderen Ausführungsbeispiele, insbesondere der Figuren 1 bis 3, verwiesen werden kann. Zur Unterscheidung der Ausführungsbeispiele ist der Buchstabe a den Bezugszeichen des Ausführungsbeispiels in den Figuren 1 bis 3 nachgestellt. In den Ausführungsbeispielen der Figuren 4 bis 6 ist der Buchstabe a durch den Buchstaben b oder c ersetzt.

Figur 4 zeigt eine Werkzeugmaschine 34b mit zumindest einer Werkzeugmaschinenvorrichtung 10b. Die Werkzeugmaschine 34b ist als tragbare Werkzeugmaschine ausgebildet. Hierbei ist die Werkzeugmaschine 34b als Bohr- und/oder Meißelhammer ausgebildet. Die Werkzeugmaschine 34b umfasst zumindest eine Schlagwerkvorrichtung 80b. Ferner umfasst die Werkzeugmaschine 34b ein Werkzeugmaschinengehäuse 40b, an dem in einem Frontbereich eine Werkzeugaufnahme 82b der Werkzeugmaschine 34b zu einer Aufnahme eines Bearbeitungswerkzeugs 44b angeordnet ist. An einer dem Frontbereich abgewandten Seite umfasst die Werkzeugmaschine 34b einen Haupthandgriff 42b zu einer Führung der Werkzeugmaschine 34b und zu einer Übertragung einer Kraft, insbesondere einer Andrückkraft, von einem Bediener auf die Werkzeugmaschine 34b. Die Werkzeugmaschine 34b ist ferner mit einer lösbaren Zusatzhandgriffeinheit ausgeführt. Hierbei kann die Zusatzhandgriffeinheit über eine Rastverbindung oder andere, einem Fachmann als sinnvoll erscheinende Verbindungen lösbar am Werkzeugmaschinengehäuse 40b befestigt sein.

Zu einer Erzeugung eines Antriebsmoments und zu einer Erzeugung eines Schlagimpulses mittels der Schlagwerkvorrichtung 80b weist die Werkzeugmaschine 34b eine Antriebseinheit 16b auf. Über eine Abtriebseinheit 52b der Werkzeugmaschine 34b wird ein Antriebsmoment der Antriebseinheit 16b zur Erzeugung eines Schlagimpulses an die Schlagwerkvorrichtung 80b übertragen. Es ist jedoch auch denkbar, dass die Werkzeugmaschine 34b entkoppelt von der Abtriebseinheit 52b ausgebildet ist und die Antriebseinheit 16b zu einer Erzeugung eines Schlagimpulses im Wesentlichen direkt auf die Schlagwerkvorrichtung 80b einwirkt. Ein Schlagimpuls der Schlagwerkvorrichtung 80b wird auf eine, einem Fachmann bekannte Art und Weise erzeugt. Ein rotierender Antrieb der Werkzeugaufnahme 82b und somit des Bearbeitungswerkzeugs 44b wird ebenfalls auf eine, einem Fachmann bereits bekannte Art und Weise erzeugt.

Die Werkzeugmaschinenvorrichtung 10b umfasst analog zu der in der Beschreibung der Figuren 1 bis 3 beschriebenen Werkzeugmaschinenvorrichtung 10a zumindest eine Bearbeitungswerkzeugsensoreinheit 28b, zumindest eine Bedienersensoreinheit 18b, zumindest eine Werkstücksensoreinheit 30b, zumindest eine Werkzeugmaschinenzubehörsensoreinheit 26b, zumindest eine Umgebungssensoreinheit 24b, zumindest eine Eingabeeinheit 32b, zumindest eine Kommunikationseinheit 20b und zumindest eine Informationsausgabeeinheit 36b.

Mittels der Eingabeeinheit 32b ist ein Betriebsmodus der Werkzeugmaschine 34b einstellbar. Hierbei weist die Werkzeugmaschine 34b zumindest einen Anlernstartbetriebsmodus, einen Lernbetriebsmodus, einen Referenzbetriebsmodus, einen Synchronisationsbetriebsmodus, einen Sicherheitsbetriebsmodus und/oder einen Automatikbetriebsmodus auf. Im Anlernbetriebsmodus ist eine Bearbeitungswerkzeugkenngröße mittels der Bearbeitungswerkzeugsensoreinheit 28b erfassbar. Hierbei ist über ein als Wegsensor und/oder Abstandssensor ausgebildetes Bearbeitungswerkzeugsensorelement 70b ein Bearbeitungswerkzeugdurchmesser des in der Werkzeugaufnahme 82b angeordneten Bearbeitungswerkzeugs 44b ermittelbar. Die Bearbeitungswerkzeugsensoreinheit 28a kann hierbei weitere, einem Fachmann als sinnvoll erscheinende Bearbeitungswerkzeugsensorelemente 72a, 76a umfassen.

Mittels des Bedienersensorelements 68b der Bedienersensoreinheit 18b ist eine Bearbeitungsdauer eines Bedieners und/oder eine Vibrationsbelastung des Bedieners erfassbar. Somit ist in Abhängigkeit der Bearbeitungsdauer eines Bedieners und/oder eine Vibrationsbelastung des Bedieners mittels der Steuer- und/oder Regeleinheit 12b eine Aktivierungsnotwendigkeit des Sicherheitsbetriebsmodus auswertbar. Zudem sind hierzu ebenfalls Kenngrößen der Umgebungssensoreinheit 24b, der Werkzeugmaschinenzubehörsensoreinheit 26b, der Bearbeitungswerkzeugsensoreinheit 28b und/oder der Werkstücksensoreinheit 30b einbeziehbar. Hierbei ist beispielsweise eine Drehmomentkupplung der Werkzeugmaschine 34b mittels der Steuer- und/oder Regeleinheit 12b auf ein geringes Überrastmoment einstellbar. Hierdurch ist von einem Bediener somit bei einem Verklemmen des Bearbeitungswerkzeugs 44b ein geringes Drehmoment aufnehmbar und ein Verletzungsrisiko kann vorteilhaft gering gehalten werden.

Zudem ist mittels eines Lagesensors 86b der Umgebungssensoreinheit 24b eine Lage der Werkzeugmaschine 34b im Raum erfassbar. Mittels der Steuer- und/oder Regeleinheit 12b ist zumindest ein Lageausgleichselement (hier nicht näher dargestellt), wie beispielsweise ein Gyroskopelement, aktivierbar, das bei einer Einhaltung eines Bohrwinkels unterstützend wirkt. Somit ist vorteilhaft eine Einhaltung eines zuvor mittels der Eingabeeinheit 32b eingestellten Bohrwinkels erreichbar.

Im Referenzbetriebsmodus ist zudem mittels einer Auswertung von Kenngrößen der Bearbeitungswerkzeugsensoreinheit 28b, der Bedienersensoreinheit 18b, der Werkstücksensoreinheit 30b, der Werkzeugmaschinenzubehörsensoreinheit 26b, der Umgebungssensoreinheit 24b, der Eingabeeinheit 32b, der Kommunikationseinheit 20b und/oder der Informationsausgabeeinheit 36b durch die Steuer- und/oder Regeleinheit 12b ein optimaler Arbeitspunkt ermittelbar. Hierzu sind beispielsweise ein Drehmoment, eine Drehzahl und/oder ein Anpressdruck erfassbar, die von der Steuer- und/oder Regeleinheit 12b auswertbar sind. Hinsichtlich weiterer Merkmale der Werkzeugmaschinenvorrichtung 10b darf auf die in der Beschreibung der Figuren 1 bis 3 beschriebene Werkzeugmaschinenvorrichtung 10a verwiesen werden.

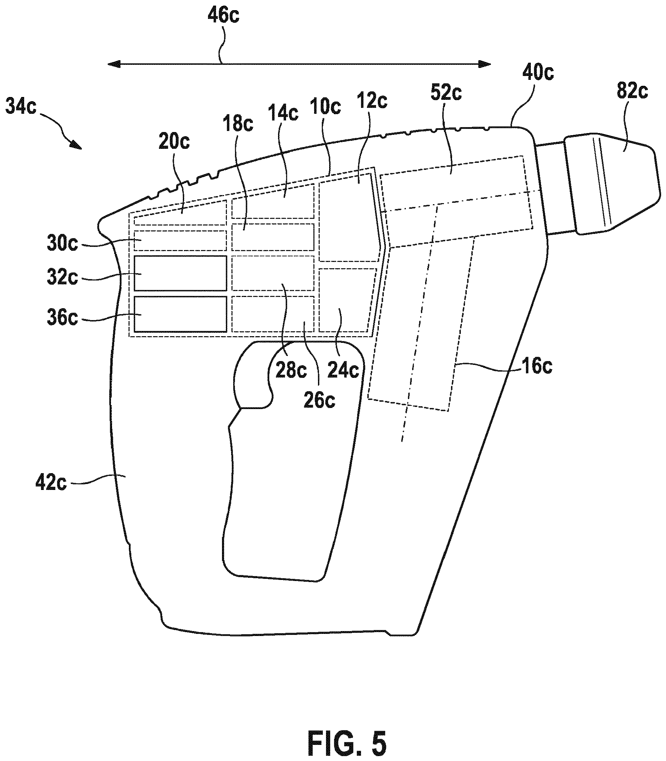

Figur 5 zeigt eine Werkzeugmaschine 34c mit zumindest einer Werkzeugmaschinenvorrichtung 10c. Die Werkzeugmaschine 34c ist als tragbare Werkzeugmaschine ausgebildet. Hierbei ist die Werkzeugmaschine 34c als Akkuschrauber ausgebildet. Die Werkzeugmaschine 34c umfasst zumindest ein Werkzeugmaschinengehäuse 40c, an dem in einem Frontbereich eine Werkzeugaufnahme 82c der Werkzeugmaschine 34c zu einer Aufnahme eines Bearbeitungswerkzeugs (hier nicht näher dargestellt) angeordnet ist. An einer dem Frontbereich abgewandten Seite umfasst die Werkzeugmaschine 34c einen Haupthandgriff 42c zu einer Führung der Werkzeugmaschine 34c und zu einer Übertragung einer Kraft, insbesondere einer Andrückkraft, von einem Bediener auf die Werkzeugmaschine 34c. Zu einer Erzeugung eines Antriebsmoments weist die Werkzeugmaschine 34c eine Antriebseinheit 16c auf. Über eine Abtriebseinheit 52c der Werkzeugmaschine 34c wird ein Antriebsmoment der Antriebseinheit 16c zur Erzeugung einer Rotationsbewegung an die Werkzeugaufnahme 82c übertragen. Es ist jedoch auch denkbar, dass die Werkzeugmaschine 34c entkoppelt von der Abtriebseinheit 52c ausgebildet ist und die Antriebseinheit 16c zu einer Erzeugung einer Rotationsbewegung im Wesentlichen direkt auf die Werkzeugaufnahme 82c einwirkt. Ein rotierender Antrieb der Werkzeugaufnahme 82c und des Bearbeitungswerkzeugs wird somit auf eine, einem Fachmann bereits bekannte Art und Weise erzeugt.

Die Werkzeugmaschinenvorrichtung 10c umfasst analog zu der in der Beschreibung der Figuren 1 bis 3 beschriebenen Werkzeugmaschinenvorrichtung 10a zumindest eine Bearbeitungswerkzeugsensoreinheit 28c, zumindest eine Bedienersensoreinheit 18c, zumindest eine Werkstücksensoreinheit 30c, zumindest eine Werkzeugmaschinenzubehörsensoreinheit 26c, zumindest eine Umgebungssensoreinheit 24c, zumindest eine Eingabeeinheit 32c, zumindest eine Kommunikationseinheit 20c und zumindest eine Informationsausgabeeinheit 36c.

Mittels der Eingabeeinheit 32c ist ein Betriebsmodus der Werkzeugmaschine 34c einstellbar. Hierbei weist die Werkzeugmaschine 34c zumindest einen Anlernstartbetriebsmodus, einen Lernbetriebsmodus, einen Referenzbetriebsmodus, einen Synchronisationsbetriebsmodus, einen Sicherheitsbetriebsmodus und/oder einen Automatikbetriebsmodus auf. Im Anlernbetriebsmodus ist eine Bearbeitungswerkzeugkenngröße mittels der Bearbeitungswerkzeugsensoreinheit 28c erfassbar. Hierbei ist über ein als Wegsensor und/oder Abstandssensor ausgebildetes Bearbeitungswerkzeugsensorelement 70c ein Bearbeitungswerkzeugdurchmesser des in der Werkzeugaufnahme 82c angeordneten Bearbeitungswerkzeugs ermittelbar.

Im Synchronisationsbetriebsmodus ist mittels der Kommunikationseinheit 20c eine Verbindung zwischen der Steuer- und/oder Regeleinheit 12c und einem Ladegerät (hier nicht näher dargestellt) herstellbar. Hierbei ist mittels der Steuer- und/oder Regeleinheit 12c auswertbar, wann ein an der Werkzeugmaschine 34c angeordneter Akku entladen ist und wann ein im Ladegerät angeordneter Akku vollständig geladen ist. Somit kann extrapoliert werden wann der in Verwendung befindliche Akku entladen ist und der zweite Akku nach Bedarf schonend oder schnell geladen werden muss.

Mittels eines Bedienersensorelements 68c der Bedienersensoreinheit 18c und/oder mittels einer Übertragung einer Bedienerstandkenngröße von der Kommunikationseinheit 20c, die mit einer als Sicherheitskleidungsüberwachungseinheit ausgebildeten externen Einheit (hier nicht näher dargestellt) kommuniziert, auf die Steuer- und/oder Regeleinheit 12c ist ein sicherer Stand eines Bedieners erfassbar und/oder auswertbar. Der sichere Stand kann beispielsweise infolge eines Sensorelements in einem Arbeitsschuh eines Bedieners erfasst werden und mittels der Kommunikationseinheit 20c auf die Steuer- und/oder Regeleinheit 12c übertragen werden. Ferner ist mittels der Bedienersensoreinheit 18c in Abhängigkeit einer Reaktionszeit eines Eingreifens eines Bedieners auf beispielsweise ein schlagartiges Gegendrehmoment und/oder eines Werts einer Greifkraft eines Bedieners eine Bedienerermüdungskenngröße erfassbar. Somit ist in Abhängigkeit der Bedienerstandkenngröße und/oder einer Bedienerermüdungskenngröße mittels der Steuer- und/oder Regeleinheit 12c eine Aktivierungsnotwendigkeit des Sicherheitsbetriebsmodus auswertbar. Zudem sind hierzu ebenfalls Kenngrößen der Umgebungssensoreinheit 24c, der Werkzeugmaschinenzubehörsensoreinheit 26c, der Bearbeitungswerkzeugsensoreinheit 28c und/oder der Werkstücksensoreinheit 30c einbeziehbar. Hinsichtlich weiterer Merkmale der Werkzeugmaschinenvorrichtung 10c darf auf die in der Beschreibung der Figuren 1 bis 3 beschriebene Werkzeugmaschinenvorrichtung 10a verwiesen werden.

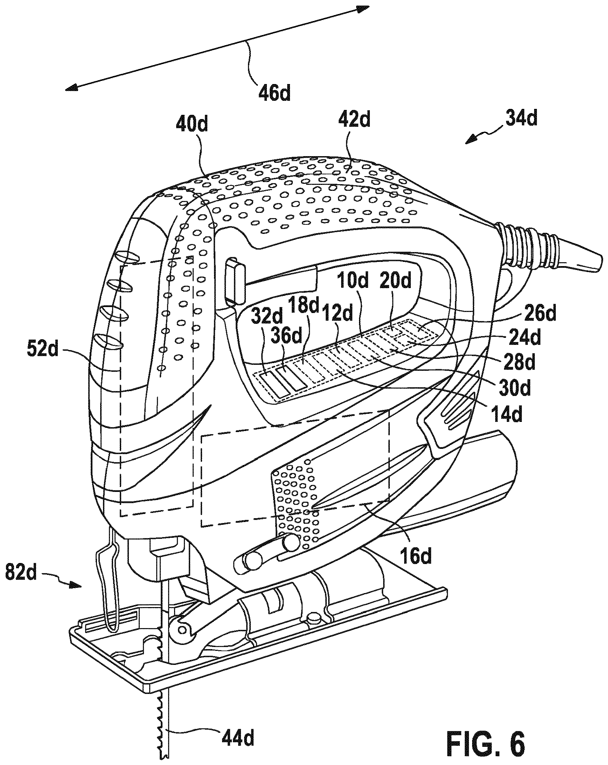

Figur 6 zeigt eine Werkzeugmaschine 34d mit zumindest einer Werkzeugmaschinenvorrichtung 10d. Die Werkzeugmaschine 34d ist als tragbare Werkzeugmaschine ausgebildet. Hierbei ist die Werkzeugmaschine 34d als Stichsäge ausgebildet. Die Werkzeugmaschine 34d weist ein Werkzeugmaschinengehäuse 40d auf, das eine Antriebseinheit 16d der Werkzeugmaschine 34d und eine Abtriebseinheit 52d der Werkzeugmaschine 34d umschließt. Die Antriebseinheit 16d und die Abtriebseinheit 52d sind dazu vorgesehen, ein in einer Werkzeugaufnahme 82d der Werkzeugmaschine 34d eingespanntes Bearbeitungswerkzeug 44d oszillierend anzutreiben. Hierbei wird das Bearbeitungswerkzeug 44d im Wesentlichen senkrecht zu einer Bearbeitungsrichtung oszillierend angetrieben. Das Bearbeitungswerkzeug 44d ist als Stichsägeblatt ausgebildet. Es ist jedoch auch denkbar, dass das Bearbeitungswerkzeug 44d von einem anderen, einem Fachmann als sinnvoll erscheinendem Bearbeitungswerkzeug gebildet wird. Ein oszillierender Antrieb des Bearbeitungswerkzeugs 44d erfolgt hierbei auf eine, einem Fachmann bereits bekannte Art und Weise.

Die Werkzeugmaschinenvorrichtung 10d umfasst analog zu der in der Beschreibung der Figuren 1 bis 3 beschriebenen Werkzeugmaschinenvorrichtung 10a zumindest eine Bearbeitungswerkzeugsensoreinheit 28d, zumindest eine Bedienersensoreinheit 18d, zumindest eine Werkstücksensoreinheit 30d, zumindest eine Werkzeugmaschinenzubehörsensoreinheit 26d, zumindest eine Umgebungssensoreinheit 24d, zumindest eine Eingabeeinheit 32d, zumindest eine Kommunikationseinheit 20d und zumindest eine Informationsausgabeeinheit 36d.

Mittels der Eingabeeinheit 32d ist ein Betriebsmodus der Werkzeugmaschine 34d einstellbar. Hierbei weist die Werkzeugmaschine 34d zumindest einen Anlernstartbetriebsmodus, einen Lernbetriebsmodus, einen Referenzbetriebsmodus, einen Synchronisationsbetriebsmodus, einen Sicherheitsbetriebsmodus und/oder einen Automatikbetriebsmodus auf. Im Anlernbetriebsmodus ist eine Bearbeitungswerkzeugkenngröße mittels der Bearbeitungswerkzeugsensoreinheit 28d erfassbar. Hierbei ist infolge eines Aktivierens der Antriebseinheit 16d oder eines zusätzlichen Aktuators der Bearbeitungswerkzeugsensoreinheit 28d eine Schwingung des Bearbeitungswerkzeugs 44d erzeugbar. Die Schwingung des Bearbeitungswerkzeugs 44d ist mittels eines Bearbeitungswerkzeugsensorelements 70d, das als Beschleunigungssensor ausgebildet ist, erfassbar und mittels der Steuer- und/oder Regeleinheit 12d auswertbar. Somit kann beispielsweise auf einen Defekt oder eine fehlerhafte Montage des Bearbeitungswerkzeugs 44d geschlossen werden.

Mittels eines Bedienersensorelements 68d der Bedienersensoreinheit 18d ist eine Korrekturhäufigkeit eines einzubringenden Schnitts erfassbar, die auf eine Ermüdung eines Bedieners schließen lässt. Somit ist in Abhängigkeit der Korrekturhäufigkeit mittels der Steuer- und/oder Regeleinheit 12d eine Aktivierungsnotwendigkeit des Sicherheitsbetriebsmodus auswertbar. Zudem sind hierzu ebenfalls Kenngrößen der Umgebungssensoreinheit 24d, der Werkzeugmaschinenzubehörsensoreinheit 26d, der Bearbeitungswerkzeugsensoreinheit 28d und/oder der Werkstücksensoreinheit 30d einbeziehbar. Hinsichtlich weiterer Merkmale der Werkzeugmaschinenvorrichtung 10d darf auf die in der Beschreibung der Figuren 1 bis 3 beschriebene Werkzeugmaschinenvorrichtung 10a verwiesen werden.

## Patentansprüche

1. Werkzeugmaschinenvorrichtung, insbesondere Handwerkzeugmaschinenvorrichtung, mit einem Werkzeugmaschinengehäuse (40a) und/oder einem Haupthandgriff (42a) und mit zumindest einer Steuer- und/oder Regeleinheit (12a; 12a'; 12b; 12c; 12d) und mit zumindest einer Antriebseinheitssensoreinheit (14a; 14a'; 14b; 14c; 14d) zu einer Erfassung zumindest einer Antriebseinheitskenngröße, die zumindest zu einer Steuerung und/oder Regelung einer Antriebseinheit (16a; 16a'; 16b; 16c; 16d) einer Werkzeugmaschine und/oder zu einer Informationsausgabe an einen Bediener von der Steuer- und/oder Regeleinheit (12a; 12a'; 12b; 12c; 12d) verarbeitbar ist, **gekennzeichnet durch** zumindest eine Bedienersensoreinheit (18a; 18a'; 18b; 18c; 18d) zu einer Erfassung zumindest einer bedienerspezifischen Kenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist, wobei die Bedienersensoreinheit (18a; 18a'; 18b; 18c; 18d) zumindest ein Bedienersensorelement (68a) aufweist, wobei das Bedienersensorelement (68a) als Schwingungssensor, insbesondere als dreiachsiger Beschleunigungssensor, ausgebildet ist und wobei mittels der Bedienersensoreinheit (18a; 18a'; 18b; 18c; 18d) eine auf einen Bediener einwirkende Schwingung am Werkzeugmaschinengehäuse (40a) und/oder am Haupthandgriff (42a) erfassbar ist.

2. Werkzeugmaschinenvorrichtung nach Anspruch 1, **gekennzeichnet durch** zumindest eine Kommunikationseinheit (20a; 20a'; 20b; 20c; 20d) zu einer Kommunikation mit zumindest einer externen Einheit (22a; 22a'; 22b; 22c; 22d) zu einem Austausch von elektronischen Daten zumindest zu einer Steuerung und/oder Regelung der Antriebseinheit (16a; 16a'; 16b; 16c; 16d).

3. Werkzeugmaschinenvorrichtung nach Anspruch 2, **dadurch gekennzeichnet, dass** die Steuer- und/oder Regeleinheit (12a; 12a'; 12b; 12c; 12d) dazu vorgesehen ist, mittels der Kommunikationseinheit (20a; 20a'; 20b; 20c; 20d) auf eine zentrale Datenbank zuzugreifen, in der zumindest eine Sicherheits- und/oder Betriebsbereichsregel hinterlegt sind/ist, die zumindest zu einer Steuer- und/oder Regelung der Antriebseinheit (16a; 16a'; 16b; 16c; 16d) von der Steuer- und/oder Regeleinheit (12a; 12a'; 12b; 12c; 12d) verarbeitbar sind/ist.

4. Werkzeugmaschinenvorrichtung nach einem der vorhergehenden Ansprüche, **dadurch gekennzeichnet, dass** die Steuer- und/oder Regeleinheit (12a; 12a'; 12b; 12c; 12d) dazu vorgesehen ist, zumindest in Abhängigkeit von der zumindest einen bedienerspezifischen Kenngröße eine von einem Bediener unbeherrschte Bedienung der Werkzeugmaschine zu erkennen.

5. Werkzeugmaschinenvorrichtung zumindest nach Anspruch 2, **dadurch gekennzeichnet, dass** die Steuer- und/oder Regeleinheit (12a; 12a'; 12b; 12c; 12d) dazu vorgesehen ist, zumindest in Abhängigkeit von zumindest einer mittels der Bedienersensoreinheit (18a; 18a'; 18b; 18c; 18d) erfassten bedienerspezifischen Kenngröße mittels der Kommunikationseinheit (20a; 20a'; 20b; 20c; 20d) zumindest ein Notsignal auszugeben.

6. Werkzeugmaschinenvorrichtung nach einem der vorhergehenden Ansprüche, **dadurch gekennzeichnet, dass** die Steuer- und/oder Regeleinheit (12a; 12a'; 12b; 12c; 12d) dazu vorgesehen ist, zumindest in Abhängigkeit von einer als Bedienerbelastung ausgebildeten bedienerspezifischen Kenngröße die Antriebseinheit (16a; 16a'; 16b; 16c; 16d) zu steuern und/oder zu regeln und/oder eine Information auszugeben.

7. Werkzeugmaschinenvorrichtung nach einem der vorhergehenden Ansprüche, **gekennzeichnet durch** zumindest eine Umgebungssensoreinheit (24a; 24a'; 24b; 24c; 24d) zu einer Erfassung zumindest einer Umgebungskenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

8. Werkzeugmaschinenvorrichtung nach Anspruch 6, **dadurch gekennzeichnet, dass** die Steuer- und/oder Regeleinheit (12a; 12a'; 12b; 12c; 12d) zumindest einen in einer Speichereinheit der Steuer- und/oder Regeleinheit (12a; 12a'; 12b; 12c; 12d) abgespeicherten Parameter zu einer Steuerung und/oder Regelung der Antriebseinheit (16a; 16a'; 16b; 16c; 16d) zumindest in Abhängigkeit von zumindest einer mittels der Umgebungssensoreinheit (24a; 24a'; 24b; 24c; 24d) erfassten und als globale Position ausgebildeten Umgebungskenngröße adaptiert.

9. Werkzeugmaschinenvorrichtung nach einem der vorhergehenden Ansprüche, **gekennzeichnet durch** zumindest eine Werkzeugmaschinenzubehörsensoreinheit (26a; 26a'; 26b; 26c; 26d) zu einer Erfassung zumindest einer Werkzeugmaschinenzubehörkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

10. Werkzeugmaschinenvorrichtung nach einem der vorhergehenden Ansprüche, **gekennzeichnet durch** zumindest eine Bearbeitungswerkzeugsensoreinheit (28a; 28a'; 28b; 28c; 28d) zu einer Erfassung zumindest einer Bearbeitungswerkzeugkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

11. Werkzeugmaschinenvorrichtung nach einem der vorhergehenden Ansprüche, **gekennzeichnet durch** zumindest eine Werkstücksensoreinheit (30a; 30a'; 30b; 30c; 30d) zu einer Erfassung zumindest einer Werkstückkenngröße, die zumindest zu einer Steuerung und/oder Regelung der Antriebseinheit (16a; 16a'; 16b; 16c; 16d) und/oder zu einer Informationsausgabe an einen Bediener von der Steuer- und/oder Regeleinheit (12a; 12a'; 12b; 12c; 12d) verarbeitbar ist.

12. Werkzeugmaschinenvorrichtung nach Anspruch 10, **dadurch gekennzeichnet, dass** die Steuer- und/oder Regeleinheit (12a; 12a'; 12b; 12c; 12d) in zumindest einem Betriebsmodus dazu vorgesehen ist, in Abhängigkeit von zumindest einer mittels der Werkstücksensoreinheit (30a; 30a'; 30b; 30c; 30d) erfassten Werkstückkenngröße, die einen in einem Werkstück befindlichen Gegenstand definiert, die Antriebseinheit (16a; 16a'; 16b; 16c; 16d) zu steuern und/oder zu regeln.

13. Werkzeugmaschinenvorrichtung nach einem der vorhergehenden Ansprüche, **dadurch gekennzeichnet, dass** die Antriebseinheitssensoreinheit (14a; 14a'; 14b; 14c; 14d) dazu vorgesehen ist, zumindest eine als Lüftungskenngröße ausgebildete Antriebseinheitskenngröße und/oder eine als Bedienergefährdungskenngröße ausgebildete Antriebseinheitskenngröße zu erfassen.

14. Werkzeugmaschine, insbesondere tragbare Werkzeugmaschine, mit zumindest einer Werkzeugmaschinenvorrichtung nach einem der vorhergehenden Ansprüche.

15. Werkzeugmaschinensystem mit zumindest einer Werkzeugmaschine nach Anspruch 14 und mit zumindest einer externen Einheit, insbesondere einer externen Sensoreinheit.

16. Verfahren zu einer Steuerung und/oder Regelung zumindest einer Werkzeugmaschine nach Anspruch 14, **dadurch gekennzeichnet, dass** die Steuer- und/oder Regeleinheit (12a; 12a'; 12b; 12c; 12d) zumindest einen Bedienerzustand ermittelt und den Bedienerzustand mittels einer Informationsausgabeeinheit (36a; 36a'; 36b; 36c; 36d) ausgibt und/oder zu einer Steuerung und/oder Regelung der Antriebseinheit (16a; 16a'; 16b; 16c; 16d) und/oder zumindest einer Sicherheitsfunktion der Werkzeugmaschine berücksichtigt.

17. Verfahren nach Anspruch 16 **dadurch gekennzeichnet, dass** die Steuer- und/oder Regeleinheit (12a; 12a'; 12b; 12c; 12d) in zumindest einem Betriebsmodus zumindest teilweise automatisch mittels einer Kommunikationseinheit (20a; 20a'; 20b; 20c; 20d) auf eine zentrale Datenbank zugreift, in der zumindest eine Sicherheits- und/oder Betriebsbereichsregel hinterlegt sind/ist, die zumindest zu einer Steuer- und/oder Regelung der Antriebseinheit (16a; 16a'; 16b; 16c; 16d) von der Steuer- und/oder Regeleinheit (12a; 12a'; 12b; 12c; 12d) verarbeitbar sind/ist.

18. Verfahren nach Anspruch 16 oder 17 **dadurch gekennzeichnet, dass** die Steuer- und/oder Regeleinheit (12a; 12a'; 12b; 12c; 12d) zumindest zu einer Steuer- und/oder Regelung der Antriebseinheit (16a; 16a'; 16b; 16c; 16d) werkzeugmaschinensensorerfasste Daten und/oder kommunikationseinheitsübermittelte Daten nutzt.

19. Verfahren nach einem der Ansprüche 16 bis 18 **dadurch gekennzeichnet, dass** die Steuer- und/oder Regeleinheit (12a; 12a'; 12b; 12c; 12d) in Abhängigkeit von werkzeugmaschinensensorerfassten Daten und/oder von kommunikationseinheitsübermittelten Daten zumindest eine Information mittels der Informationsausgabeeinheit (36a; 36a'; 36b; 36c; 36d) ausgibt.

20. Verfahren nach einem der Ansprüche 16 bis 19 **dadurch gekennzeichnet, dass** die Steuer- und/oder Regeleinheit (12a; 12a'; 12b; 12c; 12d) zumindest eine Betriebsmoduseinstellung der Werkzeugmaschine in Abhängigkeit von werkzeugmaschinensensorerfassten Daten und/oder von kommunikationseinheitsübermittelten Daten steuert und/oder regelt.

## Claims

1. Power tool device, in particular a handheld power tool device, with a power tool housing (40a) and/or a main handle (42a) and with at least one open-loop and/or closed-loop control unit (12a; 12a'; 12b; 12c; 12d) and with at least one drive unit sensor unit (14a; 14a'; 14b; 14c; 14d) for recording at least one drive unit characteristic variable, which can be processed by the open-loop and/or closed-loop control unit (12a; 12a'; 12b; 12c; 12d) at least for providing an open-loop and/or closed-loop control of a drive unit (16a; 16a'; 16b; 16c; 16d) of a power tool and/or for providing an output of information to an operator, **characterized by** at least one operator sensor unit (18a; 18a'; 18b; 18c; 18d) for recording at least one operator-specific characteristic variable, which can be processed by the open-loop and/or closed-loop control unit (12a; 12a'; 12b; 12c; 12d) at least for providing an open-loop and/or closed-loop control of a drive unit (16a; 16a'; 16b; 16c; 16d) and/or for providing an output of information to an operator, wherein the operator sensor unit (18a; 18a'; 18b; 18c; 18d) comprises at least one operator sensor element (68a), wherein the operator sensor element (68a) is formed as a vibration sensor, in particular as a three-axis acceleration sensor, and wherein, by means of the operator sensor unit (18a; 18a' ; 18b; 18c; 18d), a vibration that acts on an operator can be recorded on the power tool housing (40a) and/or on the main handle (42a) .

2. Power tool device according to Claim 1, **characterized by** at least one communication unit (20a; 20a'; 20b; 20c; 20d) for communication with at least one external unit (22a; 22a'; 22b; 22c; 22d) for an exchange of electronic data at least for providing an open-loop and/or closed-loop control of the drive unit (16a; 16a'; 16b; 16c; 16d) .

3. Power tool device according to Claim 2, **characterized in that** the open-loop and/or closed-loop control unit (12a; 12a'; 12b; 12c; 12d) is intended for accessing by means of the communication unit (20a; 20a'; 20b; 20c; 20d) a central database, in which there is stored at least one safety and/or operating area rule, which can be processed by the open-loop and/or closed-loop control unit (12a; 12a'; 12b; 12c; 12d) at least for providing an open-loop and/or closed-loop control of the drive unit (16a; 16a'; 16b; 16c; 16d).

4. Power tool device according to one of the preceding claims, **characterized in that** the open-loop and/or the closed-loop control unit (12a; 12a'; 12b; 12c; 12d) is intended for detecting, at least in dependence on the at least one operator-specific characteristic variable, operation of the power tool that cannot be controlled by an operator.

5. Power tool device at least according to Claim 2, **characterized in that** the open-loop and/or the closed-loop control unit (12a; 12a'; 12b; 12c; 12d) is intended for outputting at least one emergency signal by means of the communication unit (20a; 20a'; 20b; 20c; 20d) at least in dependence on at least one operator-specific characteristic variable recorded by means of the operator sensor unit (18a; 18a'; 18b; 18c; 18d).

6. Power tool device according to one of the preceding claims, **characterized in that** the open-loop and/or the closed-loop control unit (12a; 12a'; 12b; 12c; 12d) intended for controlling the drive unit (16a; 16a'; 16b; 16c; 16d) in an open-loop and/or closed-loop manner and/or for outputting an item of information at least in dependence on an operator-specific characteristic variable formed as operator exposure to stress.

7. Power tool device according to one of the preceding claims, **characterized in that** at least one ambient sensor unit (24a; 24a'; 24b; 24c; 24d) can be processed by the open-loop and/or the closed-loop control unit (12a; 12a'; 12b; 12c; 12d) for recording at least one ambient characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator.

8. Power tool device according to Claim 6, **characterized in that** the open-loop and/or the closed-loop control unit (12a; 12a'; 12b; 12c; 12d) adapts at least one parameter stored in a memory unit of the open-loop and/or closed-loop control unit (12a; 12a'; 12b; 12c; 12d) for providing an open-loop and/or closed-loop control of the drive unit (16a; 16a'; 16b; 16c; 16d) at least in dependence on at least one ambient characteristic variable recorded by means of the ambient sensor unit (24a; 24a'; 24b; 24c; 24d) and formed as a global position.

9. Power tool device according to one of the preceding claims, **characterized by** at least one power tool accessory sensor unit (26a; 26a'; 26b; 26c; 26d) for recording at least one power tool accessory characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator.

10. Power tool device according to one of the preceding claims, **characterized by** at least one machining tool sensor unit (28a; 28a'; 28b; 28c; 28d) for recording at least one machining tool characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator.

11. Power tool device according to one of the preceding claims, **characterized by** at least one workpiece sensor unit (30a; 30a'; 30b; 30c; 30d) for recording at least one workpiece characteristic variable, which can be processed by the open-loop and/or closed-loop control unit (12a; 12a'; 12b; 12c; 12d) at least for providing an open-loop and/or closed-loop control of the drive unit (16a; 16a'; 16b; 16c; 16d) and/or for providing an output of information to an operator.

12. Power tool device according to Claim 10, **characterized in that,** in at least one operating mode, the open-loop and/or the closed-loop control unit (12a; 12a'; 12b; 12c; 12d) is intended to control the drive unit (16a; 16a'; 16b; 16c; 16d) in an open-loop and/or closed-loop manner in dependence on at least one workpiece characteristic variable that is recorded by means of the workpiece sensor unit (30a; 30a'; 30b; 30c; 30d) and defines an object that is located in a workpiece.

13. Power tool device according to one of the preceding claims, **characterized in that** the drive unit sensor unit (14a; 14a'; 14b; 14c; 14d) is intended for recording at least one drive unit characteristic variable formed as a ventilation characteristic variable and/or a drive unit characteristic variable formed as an operator risk characteristic variable.

14. Power tool, in particular a portable power tool, with at least one power tool device according to one of the preceding claims.

15. Power tool system with at least one power tool according to Claim 14 and with at least one external unit, in particular an external sensor unit.

16. Method for controlling at least one power tool in an open-loop and/or closed-loop manner according to Claim 14, **characterized in that** the open-loop and/or closed-loop control unit (12a; 12a'; 12b; 12c; 12d) determines at least one operator state and outputs the operator state by means of an information output unit (36a; 36a'; 36b; 36c; 36d) and/or makes allowance for it for providing an open-loop and/or closed-loop control of the drive unit (16a; 16a'; 16b; 16c; 16d) and/or at least one safety function of the power tool.

17. Method according to Claim 16, **characterized in that,** in at least one operating mode, the open-loop and/or closed-loop control unit (12a; 12a'; 12b; 12c; 12d) accesses at least partially automatically by means of a communication unit (20a; 20a'; 20b; 20c; 20d) a central database, in which there is stored at least one safety and/or operating area rule, which can be processed by the open-loop and/or closed-loop control unit (12a; 12a'; 12b; 12c; 12d) at least for providing an open-loop and/or closed-loop control of the drive unit (16a; 16a'; 16b; 16c; 16d).

18. Method according to Claim 16 or 17, **characterized in that** the open-loop and/or closed-loop control unit (12a; 12a'; 12b; 12c; 12d) uses data recorded by the power tool sensor and/or data transmitted by the communication unit at least for providing an open-loop and/or closed-loop control of the drive unit (16a; 16a'; 16b; 16c; 16d).

19. Method according to one of Claims 16 to 18, **characterized in that** the open-loop and/or closed-loop control unit (12a; 12a'; 12b; 12c; 12d) outputs at least one item of information by means of the information output unit (36a; 36a'; 36b; 36c; 36d) in dependence on data recorded by the power tool sensor and/or data transmitted by the communication unit.

20. Method according to one of Claims 16 to 19, **characterized in that** the open-loop and/or closed-loop control unit (12a; 12a'; 12b; 12c; 12d) controls at least one operating mode setting of the power tool in an open-loop and/or closed-loop manner in dependence on data recorded by the power tool sensor and/or data transmitted by the communication unit.

## Revendications

1. Dispositif de machine-outil, en particulier dispositif de machine-outil portative, comportant un boîtier de machine-outil (40a) et/ou une poignée principale (42a) et comportant au moins une unité de commande et/ou de régulation (12a ; 12a' ; 12b ; 12c ; 12d) et au moins une unité de détection d'unité d'entraînement (14a ; 14a' ; 14b ; 14c ; 14d) servant à détecter au moins un paramètre caractéristique de l'unité de commande qui peut être traité au moins pour commander et/ou réguler une unité d'entraînement (16a ; 16a' ; 16b ; 16c ; 16d) d'une machine-outil et/ou à fournir des informations à un opérateur de l'unité de commande et/ou de régulation (12a ; 12a' ; 12b ; 12c ; 12d), **caractérisé par** au moins une unité de détection d'opérateur (18a ; 18a' ; 18b ; 18c ; 18d) servant à détecter au moins un paramètre caractéristique spécifique de l'opérateur qui peut être traité au moins pour commander et/ou réguler l'unité d'entraînement (16a ; 16a' ; 16b ; 16c ; 16d) et/ou pour fournir des informations à un opérateur de l'unité de commande et/ou de régulation (12a ; 12a' ; 12b ; 12c ; 12d), dans lequel l'unité de détection d'opérateur (18a ; 18a' ; 18b ; 18c ; 18d) comporte au moins un élément de détection d'opérateur (68a), dans lequel l'élément de détection d'opérateur (68a) est réalisé sous la forme d'un capteur de vibration, en particulier sous la forme d'un capteur d'accélération à trois axes, et dans lequel une vibration agissant sur un opérateur peut être détectée sur le boîtier (40a) de la machine-outil et/ou sur la poignée principale (42a) au moyen de l'unité de détection d'opérateur (18a ; 18a' ; 18b ; 18c ; 18d).

2. Dispositif de machine-outil selon la revendication 1, **caractérisé par** au moins une unité de communication (20a ; 20a' ; 20b ; 20c ; 20d) servant à communiquer avec au moins une unité externe (22a ; 22a' ; 22b ; 22c ; 22d) pour un échange de données électroniques au moins pour commander et/ou réguler l'unité d'entraînement (16a ; 16a' ; 16b ; 16c ; 16d).

3. Dispositif de machine-outil selon la revendication 2, **caractérisé en ce que** l'unité de commande et/ou de régulation (12a ; 12a' ; 12b ; 12c ; 12d) est conçue pour accéder au moyen de l'unité de communication (20a ; 20a' ; 20b ; 20c ; 20d) à une base de données centrale dans laquelle est stockée au moins une règle de sécurité et/ou de plage de fonctionnement qui peuvent/peut être traitée par l'unité de commande et/ou de régulation (12a ; 12a' ; 12b ; 12c ; 12d) au moins pour commander et/ou réguler l'unité d'entraînement (16a ; 16a' ; 16b ; 16c ; 16d).

4. Dispositif de machine-outil selon l'une des revendications précédentes, **caractérisé en ce que** l'unité de commande et/ou de régulation (12a ; 12a' ; 12b ; 12c ; 12d) est conçue pour détecter, au moins en fonction dudit au moins un paramètre caractéristique spécifique de l'opérateur, un fonctionnement de la machine-outil qui n'est pas contrôlé par un opérateur.

5. Dispositif de machine-outil selon au moins la revendication 2, **caractérisé en ce que** l'unité de commande et/ou de régulation (12a ; 12a' ; 12b ; 12c ; 12d) est conçue pour délivrer au moins un signal d'alarme au moyen de l'unité de communication (20a ; 20a' ; 20b ; 20c ; 20d), au moins en fonction d'au moins un paramètre caractéristique spécifique de l'opérateur, détecté au moyen de l'unité de détection d'opérateur (18a ; 18a' ; 18b ; 18c ; 18d).

6. Dispositif de machine-outil selon l'une des revendications précédentes, **caractérisé en ce que** l'unité de commande et/ou de régulation (12a ; 12a' ; 12b ; 12c ; 12d) est conçue pour commander et/ou réguler l'unité d'entraînement (16a ; 16a' ; 16a' ; 16b ; 16c ; 16d) et/ou pour fournir une information au moins en fonction d'un paramètre caractéristique spécifique de l'opérateur conçu en tant que charge de l'opérateur.

7. Dispositif de machine-outil selon l'une des revendications précédentes, **caractérisé par** au moins une unité de détection d'environnement (24a ; 24a' ; 24b ; 24c ; 24d) servant à détecter au moins un paramètre caractéristique d'environnement qui peut être traité au moins pour commander et/ou réguler l'unité d'entraînement (16a ; 16a' ; 16b ; 16c ; 16d) et/ou pour fournir des informations à un opérateur de l'unité de commande et/ou de régulation (12a ; 12a' ; 12b ; 12c ; 12d).

8. Dispositif de machine-outil selon la revendication 6, **caractérisé en ce que** l'unité de commande et/ou de régulation (12a ; 12a' ; 12b ; 12c ; 12d) adapte au moins un paramètre stocké dans une unité de stockage de l'unité de commande et/ou de régulation (12a ; 12a' ; 12b ; 12c ; 12d) à une commande et/ou une régulation de l'unité d'entraînement (16a ; 16a' ; 16b ; 16c ; 16d) au moins en fonction d'au moins un paramètre caractéristique d'environnement détecté au moyen de l'unité de détection d'environnement (24a ; 24a' ; 24b ; 24c ; 24d) et conçue en tant que position globale.

9. Dispositif de machine-outil selon l'une des revendications précédentes, **caractérisé par** au moins une unité de détection d'accessoires de machine-outil (26a ; 26a' ; 26b ; 26c ; 26d) servant à détecter au moins un paramètre caractéristique d'accessoire de machine-outil qui peut être traité par l'unité de commande et/ou de régulation (12a ; 12a' ; 12b ; 12c ; 12d) au moins pour commander et/ou réguler l'unité d'entraînement (16a ; 16a' ; 16b ; 16c ; 16d) et/ou pour fournir des informations à un opérateur.

10. Dispositif de machine-outil selon l'une des revendications précédentes, **caractérisé par** au moins une unité de détection d'outil de traitement (28a ; 28a' ; 28b ; 28c ; 28d) servant à détecter au moins un paramètre caractéristique d'outil de traitement qui peut être traité par l'unité de commande et/ou de régulation (12a ; 12a' ; 12b ; 12c ; 12d) au moins pour commander et/ou réguler l'unité d'entraînement (16a ; 16a' ; 16b ; 16c ; 16d) et/ou pour fournir des informations à un opérateur.

11. Dispositif de machine-outil selon l'une des revendications précédentes, **caractérisé par** au moins une unité de détection de pièce à usiner (30a ; 30a' ; 30b ; 30c ; 30d) servant à détecter au moins un paramètre caractéristique de pièce à usiner qui peut être traité par l'unité de commande et/ou de régulation (12a ; 12a' ; 12b ; 12c ; 12d) au moins pour commander et/ou réguler l'unité d'entraînement (16a ; 16a' ; 16b ; 16c ; 16d) et/ou pour fournir des informations à un opérateur.

12. Dispositif de machine-outil selon la revendication 10, **caractérisé en ce que** l'unité de commande et/ou de régulation (12a ; 12a' ; 12b ; 12c ; 12d) est prévue dans au moins un mode de fonctionnement servant à commander et/ou à réguler l'unité d'entraînement (16a ; 16a' ; 16b ; 16c ; 16d) en fonction d'au moins un paramètre caractéristique de pièce à usiner détecté au moyen de l'unité de détection de pièce à usiner (30a ; 30a' ; 30b ; 30c ; 30d), qui définit un objet situé dans une pièce à usiner.

13. Dispositif de machine-outil selon l'une des revendications précédentes, **caractérisé en ce que** l'unité d'entraînement (14a ; 14a' ; 14b ; 14c ; 14d) est conçue pour détecter au moins un paramètre caractéristique de l'unité d'entraînement conçu en tant que paramètre caractéristique de ventilation et/ou un paramètre caractéristique de l'unité d'entraînement conçu en tant que paramètre caractéristique de danger pour l'opérateur.

14. Machine-outil, en particulier machine-outil portative, comportant au moins un dispositif de machine-outil selon l'une des revendications précédentes.

15. Système de machine-outil comprenant au moins une machine-outil selon la revendication 14 et au moins une unité externe, en particulier une unité de détection externe.

16. Procédé de commande et/ou de régulation d'au moins une machine-outil selon la revendication 14, **caractérisé en ce que** l'unité de commande et/ou de régulation (12a ; 12a' ; 12b ; 12c ; 12d) détermine au moins un état d'opérateur et fournit l'état d'opérateur au moyen d'une unité de sortie d'informations (36a ; 36a' ; 36b ; 36c ; 36d) et/ou en tient compte pour commander et/ou réguler l'unité d'entraînement (16a ; 16a' ; 16b ; 16c ; 16d) et/ou au moins une fonction de sécurité de la machine-outil.

17. Procédé selon la revendication 16, **caractérisé en ce que** l'unité de commande et/ou de régulation (12a ; 12a' ; 12b ; 12c ; 12d), dans au moins un mode de fonctionnement, accède de manière au moins partiellement automatique au moyen d'une unité de communication (20a ; 20a' ; 20b ; 20c ; 20d) à une base de données centrale dans laquelle est stockée au moins une règle de sécurité et/ou de plage de fonctionnement qui peut être traitée par l'unité de commande et/ou de régulation (12a ; 12a' ; 12b ; 12c ; 12d) au moins pour commander et/ou réguler l'unité d'entraînement (16a ; 16a' ; 16b ; 16c ; 16d).

18. Procédé selon la revendication 16 ou 17, **caractérisé en ce que** l'unité de commande et/ou de régulation (12a ; 12a' ; 12b ; 12c ; 12d) utilise des données détectées par des capteurs de machine-outil et/ou des données transmises par l'unité de communication au moins pour commander et/ou réguler l'unité d'entraînement (16a ; 16a' ; 16b ; 16c ; 16d).

19. Procédé selon l'une des revendications 16 à 18, **caractérisé en ce que** l'unité de commande et/ou de régulation (12a ; 12a' ; 12b ; 12c ; 12d) fournit au moins une information au moyen de l'unité de sortie d'informations (36a ; 36a' ; 36b ; 36c ; 36d) en fonction de données détectées par les capteurs de machine-outil et/ou de données transmises par l'unité de communication.

20. Procédé selon l'une des revendications 16 à 19, **caractérisé en ce que** l'unité de commande et/ou de régulation (12a ; 12a' ; 12b ; 12c ; 12d) commande et/ou régule au moins un réglage de mode de fonctionnement de la machine-outil en fonction de données détectées par les capteurs de la machine-outil et/ou de données transmises par l'unité de communication.
